# EUROPEAN PATENT SPECIFICATION

(11) **EP 4 094 973 B1**
(45) Date of publication and mention of the grant of the patent: **19.03.2025**
(21) Application number: 22174635.7
(22) Date of filing: 20.05.2022
(51) Int. Cl.: B60L 50/60, B62J 1/12, B62J 9/14, B62J 43/23, B62J 43/20

(54) **BATTERY STORAGE DEVICE AND ELECTRIC VEHICLE**
BATTERIESPEICHERVORRICHTUNG UND ELEKTRISCHES FAHRZEUG
DISPOSITIF DE STOCKAGE DE BATTERIE ET VÉHICULE ÉLECTRIQUE

(30) Priority: 24.05.2021 JP 2021087145
(43) Date of publication of application: 30.11.2022
(73) Proprietor: Yamaha Hatsudoki Kabushiki Kaisha, Iwata-shi, Shizuoka 438-8501 (JP)
(72) Inventor: Toyota, Takeshi, Shizuoka, 438-8501 (JP)
(74) Representative: Grünecker Patent- und Rechtsanwälte PartG mbB

(56) References cited:
- EP-A1- 2 873 599
- EP-A1- 3 480 093
- WO-A1-2019/064556
- WO-A1-2021/005767
- DE-A1- 102004 047 339
- JP-A- 2015 069 823

## Description

The present invention relates to a battery storage device for an electric vehicle according to the preamble of independent claim 1 and an electric vehicle. Such a battery storage device can be taken from the prior art document EP 2 873 599 A1.

Motorcycles using an electric motor as a driving source have been developed. WO2015/068753A1 discloses the motorcycle in which a plurality of batteries are detachable. This vehicle reduces weight of each battery while ensuring the total capacity of the batteries, thereby facilitating the battery attachment and detachment work.

In the vehicle of WO2015/068753A1, the battery case is disposed below the seat. The battery stored in the battery case is pushed downward by the spring provided on the lower surface of the seat. This reduces the vertical movement of the battery when the vehicle is running. When the force to press and hold the battery is increased by the spring, the force required for the operator to close the lid (the seat in WO 2015/068753A1) becomes large, and the load at the time of attaching and detaching the battery thereby becomes large.

It is the object of the present invention to provide a battery storage device for an electric vehicle and an electric vehicle that facilitate attaching and detaching a battery. According to the present invention said object is solved by a battery storage device for an electric vehicle having the features of independent claim 1. Preferred embodiments are laid down in the dependent claims.

(1) An example of a battery storage device for an electric vehicle proposed in the present disclosure includes a battery storing unit in which at least one battery is insertable, a pressing member, an operation lever, and an engaged portion. The pressing member includes a base in which a support shaft is provided, is movable between a closed position and an open position about the support shaft. The pressing member is configured to prevent, when in the closed position, the at least one battery from moving in a direction in which the at least one battery is removed from the battery storing unit. The pressing member is configured to allow, when in the open position, the at least one battery to move in the removing direction. The operation lever is coupled to the pressing member via a coupling shaft disposed apart from the support shaft, is movable relative to the pressing member between a fixed position and a release position about the coupling shaft. The operation lever includes an operation input portion for receiving an operation of an operator and an engaging portion. A distance between the coupling shaft and the operation input portion is longer than a distance between the coupling shaft and the engaging portion. The engaged portion is engaged with the
   engaging portion of the operation lever when the pressing member is in the closed position and the operation lever is in the fixed position. When the pressing member is in the closed position, the pressing member extends in a first direction from the support shaft. A first battery and a second battery are insertable in the battery storing unit as the at least 35 one battery, where the second battery is disposed in the first direction with respect to the first battery. The second battery may include a third surface facing in the first direction. When the pressing member is in the closed position, the coupling shaft may be away from the support shaft in the first direction and positioned farther in the second direction than the third surface. This structure serves to easily secure a sufficient space in the first direction with respect to the second battery.
(2) In the battery storage device according to (1), while the at least one battery is disposed in the battery storing unit and the pressing member is in the closed position, the operation lever in the fixed position brings the coupling shaft to be placed at a first position, and the operation lever in the release position brings the coupling shaft to be placed at a second position. The first position is closer to the battery storing unit than the second position.
(3) The battery storage device according to (1) or (2), a plurality of batteries may be insertable in the battery storing unit as the at least one battery, and the pressing member, when in the closed position, may prevent the plurality of batteries from moving in the direction in which the plurality of batteries are removed. In this manner, when the operation lever is operated, the movement of the plurality of batteries can be limited.
(4) In the battery storage device according to (1) to (3), when the pressing member is in the closed position and the operation lever is in the fixed position, a direction in which the pressing member extends from the support shaft may be opposite to a direction in which the operation lever extends from the coupling shaft. This serves to reduce a space required for the arrangement and the utilization of the pressing member and the operation lever.
(5) The battery storage device according to (1) to (4), when the pressing member is in the closed position, the pressing member extends in a first direction from the support shaft. The at least one battery may include a first surface facing in the first direction and a second surface facing in a second direction, which is opposite to the first direction, the support shaft may be positioned farther in the second direction than the second surface of the at least one battery, and the coupling shaft may be positioned farther in the first direction than the first surface of the at least one battery. This structure serves to sufficiently ensure the force acting on the battery.
(6) The battery storage device according to (1) to (5), when the pressing member is in the closed position, the pressing member may extend in a first direction from the support shaft. A first battery and a second battery may be insertable in the battery storing unit as the at least one battery, where the second battery is disposed in the first direction with respect to the first battery. The first battery and the second battery may each have an end part in a direction in which the battery is removed from the battery storing unit. When the pressing member is in the closed position, the coupling shaft may be away from the support shaft in the first direction and positioned farther in a second direction than the end part of the second battery. The second direction is opposite to the first direction. This allows the position of the coupling shaft of the operation lever to be close to the second battery in the inserting direction of the second battery. As a result, the size of the battery can be increased while maintaining the positions of the operation lever and the pressing member.
(7) The battery storage device according to (1) to (6), the at least one battery may include an end part in a direction in which the battery is removed from the battery storing unit. The coupling shaft may be positioned farther in an inserting direction of the battery than the end part of the at least one battery. This allows the position of the operation lever to be close to the battery in the inserting direction of the battery. As a result, the overall size including the battery, the pressing member, and the operation lever can be reduced.
(8) The battery storage device according to (1) to (7), the operation lever may include an elastic member that urges the operation lever from the fixed position toward the release position. This structure facilitates the operation of returning the operation lever to the release position.
(9) In the battery storage device according to (8), a stopper member may be attached to the pressing member. The stopper member is configured to be hooked to the operation lever to prevent the operation lever from moving from the fixed position to the release position. This structure prevents the operation lever from moving to the open position by receiving the elastic force of the elastic member at a timing that is not intended by the user.
(10) In the battery storage device according to (9) the stopper member is movable between an interference position and a non-interference position. The stopper member may be configured to, at the interference position, prevent the operation lever in the fixed position from moving toward the release position. The stopper member may be configured to, at the non-interference position, allow the operation lever to move toward the release position. The operation lever may include an engaging portion. The engaging portion may hook onto the stopper member in a course in which the operation lever moves from the fixed position to the release position. The engaging portion may prevent the stopper member from moving from the interference position toward the non-interference position. As a result, it is possible to prevent the sudden movement of the operation lever.
(11) In the battery storage device according to (9), the operation lever may include a stopped portion that contacts the stopper member. The stopper member may include an interference portion that contacts the stopped portion. The stopped portion initially may move in a third direction when the operation lever moves from the fixed position toward the release position. The interference portion of the stopper member initially may move in a fourth direction when the stopper member moves from the interference position toward the non-interference position, where the third direction is substantially perpendicular to the fourth direction. For example, this structure serves to effectively prevent the operation lever from being moved from the fixed position toward the release position due to the vibration generated when the electric vehicle is running.
(12) In the battery storage device according to (1) to (11), the pressing member may include a contact portion that contacts the at least one battery to urge the at least one battery in an inserting direction of the battery storing unit. The pressing member may extend in a first direction from the support shaft when in the closed position. The contact portion may be positioned closer to the support shaft than a center of the at least one battery in the first direction. This structure serves to reduce the distance between the contact portion and the support shaft, thereby increasing the lever ratio.
(13) In the battery storage device according to (1) to (12), the at least one battery may include a surface on which a charging inlet is provided. The pressing member and the operation lever may cover the surface of the at least one battery. The pressing member and the operation lever may be formed so as to expose the charging inlet. This structure allows the battery to be charged while the pressing member restricts the position change of the battery.
(14) The battery storage device according to (1) to (13) may further include a luggage compartment formed behind or in front of the battery storing unit. An inside of the battery storing unit may be connected to an inside of the luggage compartment. This structure allows large luggage to be stored in the battery storing unit and the luggage compartment when the battery is not disposed in the battery storing unit.
(15) An electric vehicle proposed in the present disclosure includes the battery storage device according to (1) to (14), the at least one battery, and a power unit that includes an electric motor driven by power from the at least one battery.
(16) The electric vehicle according to (15) may include a cover that is movable between an exposed position, at which the at least one battery, the battery storing unit, the pressing member, and the operation lever are exposed, and a non-exposed position, at which the at least one battery, the battery storing unit, the pressing member, and the operation lever are covered. When the pressing member is in the open position or the operation lever is in the release position, the pressing member or the operation lever may prevent the cover from moving from the exposed position to the non-exposed position. According to this structure, the cover is open when the operation lever is not in the fixed position, and thus it is possible to prevent the driver from driving the electric two-wheeled vehicle in such a condition. The cover may be an outer cover of the vehicle or a seat in which the driver sits.
(17) In the electric vehicle according to (16), the cover may be a seat.

### Brief Description of the Drawings

FIG. 1 is a left-side view of an electric two-wheeled vehicle as an example of an electric vehicle proposed in the present disclosure;
FIG. 2 is a perspective view of a battery storage device mounted in the electric two-wheeled vehicle shown in FIG. 1;
FIG. 3 is a plan view of a battery and a battery locking mechanism;
FIG. 4 is a perspective view of the battery locking mechanism;
FIG. 5 is a cross-sectional view of the battery locking mechanism taken along the line V-V shown in FIG. 3;
FIG. 6A is a side view of the battery and the battery locking mechanism. In FIG. 6A, the pressing member is disposed in a closed position, and an operation lever is disposed in a fixed position;
FIG. 6B is a side view of the battery and the battery locking mechanism. In FIG. 6B, the pressing member is disposed in the closed position and the operation lever is disposed in the release position;
FIG. 6C is a side view of the battery and the battery locking mechanism. In FIG. 6C, the pressing member is disposed in the open position and the operation lever is disposed in the release position;
FIG. 7 is a diagram illustrating the battery locking mechanism preventing the seat from moving in the closing direction of the seat;
FIG. 8A is a cross-sectional view of the stopper member in the interference position; and
FIG. 8B is a cross-sectional view of the stopper member in the non-interference position.

### Description of Embodiments

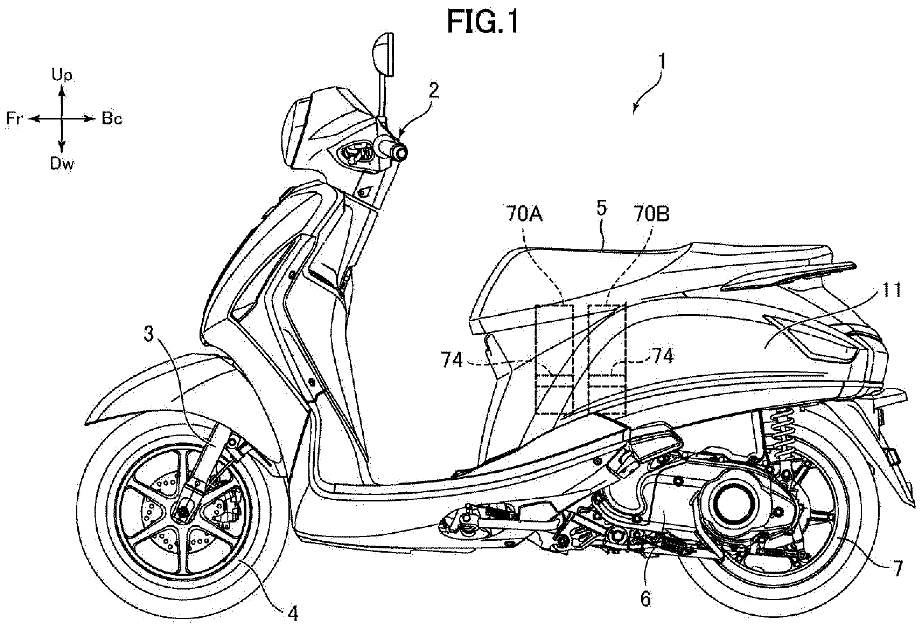

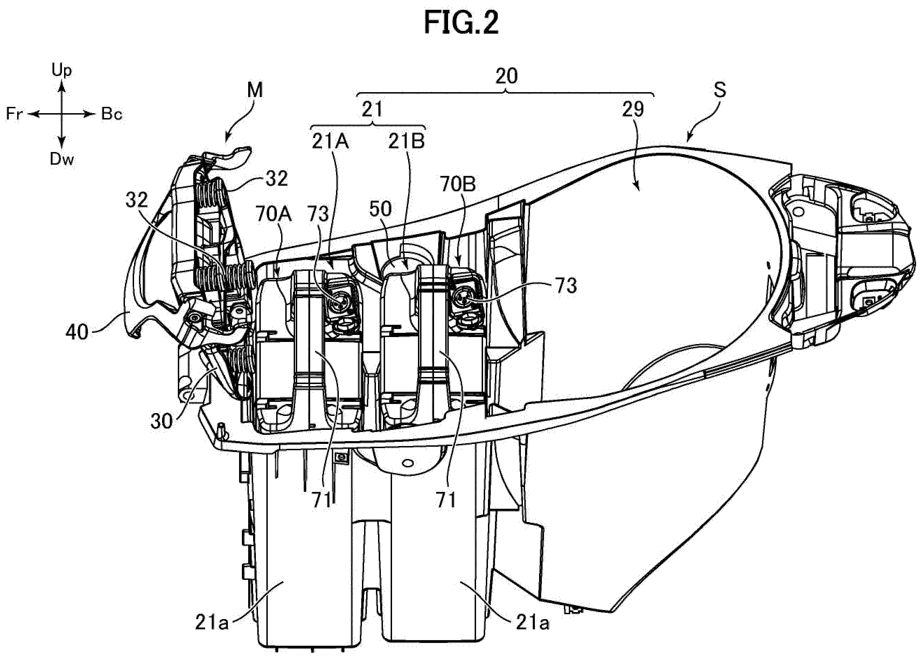

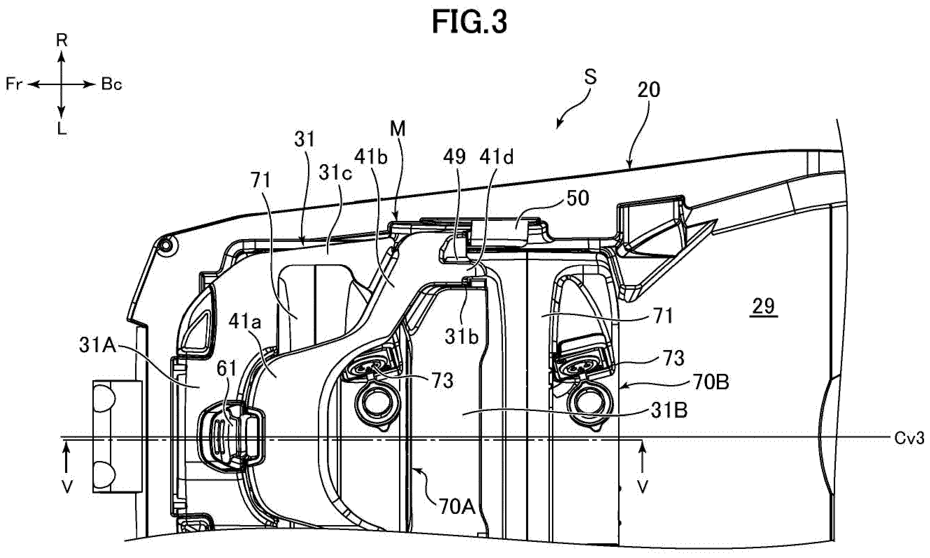

In the following, an example of a battery storage device and an electric vehicle proposed in the present disclosure will be described. In this specification, an electric two-wheeled vehicle 1 (see FIG. 1) and a battery storage device S (see FIG. 2) will be described as examples. In FIG. 1, the directions indicated by Fr and Bc are referred to as a forward direction and a rearward direction, respectively, and the directions indicated by Up and Dw are referred to as a upward direction and a downward direction, respectively. The directions indicated by R and L shown in FIG. 3 are referred to as a right direction and a left direction, respectively. The electric vehicle proposed in the present disclosure is not limited to an electric two-wheeled vehicle, but may be an electric three-wheeled vehicle or an electric four-wheeled vehicle called an ATV (All Terrain Vehicle) or an ROV (Recreational Off-Highway Vehicle).

### [Outline of electric two-wheeled vehicle]

As shown in FIG. 1, the electric two-wheeled vehicle 1 includes a handle bar 2, a steering shaft (not shown) supporting the handle bar 2, a front fork 3 that rotates integrally with the steering shaft, and a front wheel 4 supported by the front fork 3.

As shown in FIG. 1, the electric two-wheeled vehicle 1 includes a seat 5 and batteries 70A and 70B that are disposed below the seat 5. The electric two-wheeled vehicle 1 may have a plurality of batteries 70A and 70B. As shown in FIG. 2, the number of the batteries 70A and 70B may be two, for example. The two batteries 70A and 70B may be aligned in the front-rear direction. Unlike the illustrated example, the number of batteries may be one or more than two. In yet another example, the two batteries 70A and 70B may be aligned in the left-right direction.

As shown in FIG. 1, the electric two-wheeled vehicle 1 includes a power unit 6 that is driven by power received from the batteries 70A and 70B. The power unit 6 includes an inverter (not shown) for converting direct current from the batteries 70A and 70B to alternating current, and an electric motor (not shown) driven by power from the inverter.

As shown in FIG. 1, a rear wheel 7 is supported by the rear portion of the power unit 6. A footboard 8 is provided between the seat 5 and the handle bar 2. The electric two-wheeled vehicle 1 is a so-called scooter-type vehicle. The electric vehicle proposed in this disclosure is not limited to a scooter-type motorcycle.

The electric two-wheeled vehicle 1 includes a battery storage device S (see FIG. 2). The battery storage device S is disposed below the seat 5. As shown in FIG. 2, the battery storage device S includes a case 20. The case 20 includes a battery storing unit 21 in which the batteries 70A and 70B are insertable. The case 20 may also include a luggage compartment 29 for storing luggage, such as a helmet, behind the battery storing unit 21.

### [Battery storing unit]

The battery storing unit 21 may be formed such that a plurality of batteries 70A and 70B are insertable. As shown in FIG. 2, the battery storing unit 21 may include two storing units 21A and 21B disposed in the front-rear direction, for example. The two batteries 70A and 70B may be respectively insertable in the storing units 21A and 21B. The storing units 21A and 21B are box-shaped open upward, for example, and the batteries 70A and 70B are insertable from the upper side of the storing units 21A and 21B. The battery storing unit 21 and the luggage compartment 29 are covered with the sheet 5. When the sheet 5 is opened, the batteries 70A and 70B are to be inserted into or removed from the storing unit 21A and 21B. Terminals are provided inside the storing units 21A and 21B for electrically connecting to the batteries 70A and 70B.

The batteries 70A and 70B may have terminals 74 (see FIG. 1) between their upper and lower ends. Specifically, the terminals 74 may be provided on the side surfaces of the batteries 70A and 70B. A terminal for connecting to the terminals 74 may be provided on the inside of the battery storing units 21. The power of the batteries 70A and 70B is supplied to the electric motor through such a terminal. The positions of the terminals 74 are apart upwardly from the lower ends of the batteries 70A and 70B, and thus it is possible to avoid splashing of water on the terminals 74 when traveling in areas where water is gathered, for example. The position of the terminal 74 is not limited to the example described above, and may be provided on the lower surface of the batteries 70A and 70B, for example.

The two batteries 70A and 70B may be independently removable from or insertable into the storing units 21A and 21B. That is, only one battery 70A (or 70B) may be removable from the storing unit 21A (or 21B) or attachable to the storing unit 21A (or 21B). The two batteries 70A and 70B may have the same structure. In this case, the battery 70B disposed on the rear side in FIG. 2 may be inserted into the storing unit 21A on the front side, and the battery 70A disposed on the front side may be inserted into the storing unit 21B on the rear side.

The power unit 6 may be driven with only one battery 70A (or 70B) mounted in the battery storage device S. That is, the batteries 70A and 70B may be connected in parallel. In this manner, when one battery 70A (or 70B) is removed from the electric two-wheeled vehicle 1 and charged by an external power source, the other battery 70B (or 70A) is mounted on the electric two-wheeled vehicle 1 so as to run the electric two-wheeled vehicle 1. Alternatively, two batteries 70A and 70B may be required to drive the power unit 6.

As shown in FIG. 2, the storing units 21A and 21B may be formed to store substantially the entire batteries 70A and 70B. That is, the depth of the storing units 21A and 21B may correspond to the height of the batteries 70A and 70B. Alternatively, the storing units 21A and 21B may store only the lower portions of the batteries 70A and 70B, and the upper portions of the batteries 70A and 70B may be exposed from the storing units 21A and 21B. In yet another example, the storing units 21A and 21B may not be box-shaped. For example, the storing units 21A and 21B may be formed to support the batteries 70A and 70B, but expose most of the outer surfaces of the batteries 70A and 70B.

In yet another example, the storing units 21A and 21B may be formed to insert the batteries 70A and 70B from the left side (or right side) rather than from the upper side thereof. In this case, a lid to be used for exposing the batteries 70A and 70B may be provided on an outer cover 11 (see FIG. 1) of the electric two-wheeled vehicle 1. This also facilitate charging of the batteries 70A and 70B. In this case, a battery locking mechanism M (see FIG. 2) to be described later may be disposed on the left (or right) side of the batteries 70A and 70B and covered by the lid provided on the outer cover 11.

### [Luggage compartment]

As shown in FIG. 2, the luggage compartment 29 is also box-shaped open upward. By opening the seat 5, the luggage can be put into or taken out from the luggage compartment 29. The inside of the battery storing unit 21 and the inside of the luggage compartment 29 may be connected to each other. That is, a space may be formed in the inside of the battery storing unit 21 and the inside of the luggage compartment 29 to be connected with each other. For example, the inside of the storing unit 21B in the rear side may be connected to the inside of the luggage compartment 29. That is, a wall needs not be formed to divide the storing unit 21B on the rear side and the luggage compartment 29. For example, when the battery 70B is not disposed in the storing unit 21B on the rear side, this structure allows large luggage to be stored in the storing unit 21B and the luggage compartment 29.

The luggage compartment 29 and the battery storing unit 21 (i.e., storing units 21A and 21B) may be integrally formed. This serves to reduce the number of parts. Alternatively, the luggage compartment 29 and the battery storing unit 21 may be formed separately. The luggage compartment 29 and the battery storing unit 21 may be fixed to each other by a fixture, such as a screw, or each of the luggage compartment 29 and the battery storing unit 21 may be fixed to the vehicle body frame. In yet another example, the case 20 may not have the luggage compartment 29.

### [Elements of battery locking mechanism]

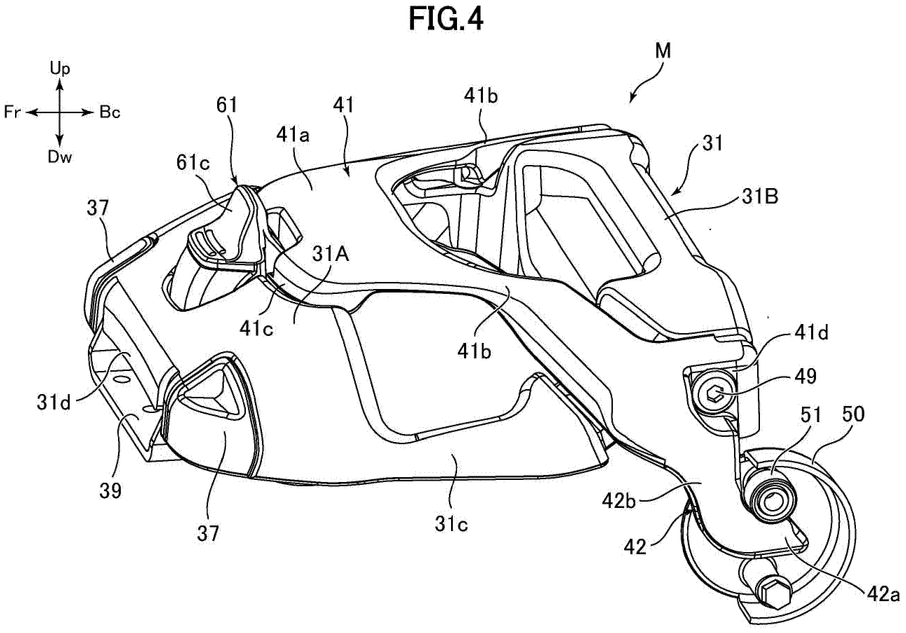

The electric two-wheeled vehicle 1 has a battery locking mechanism M (see FIG. 2). As shown in FIG. 4, the battery locking mechanism M includes a pressing member 31 that restricts upward movement of the batteries 70A and 70B stored in the storing units 21A and 21B. The battery locking mechanism M includes an operation lever 41 connected to the pressing member 31 for the operator to operate. Further, the battery locking mechanism M includes an engaged portion 51 to be engaged with the engaging the operation lever 41. The engaged portion 51 may be formed on a support member 50. As will be described later, the support member 50 may be attached to the case 20 or the body frame, for example.

### [Pressing member]

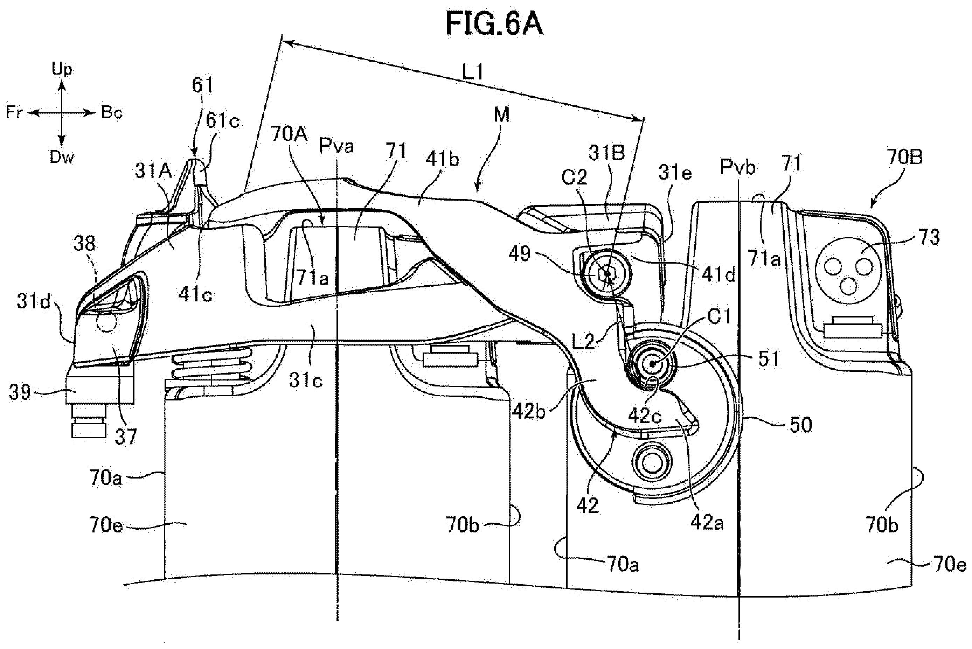

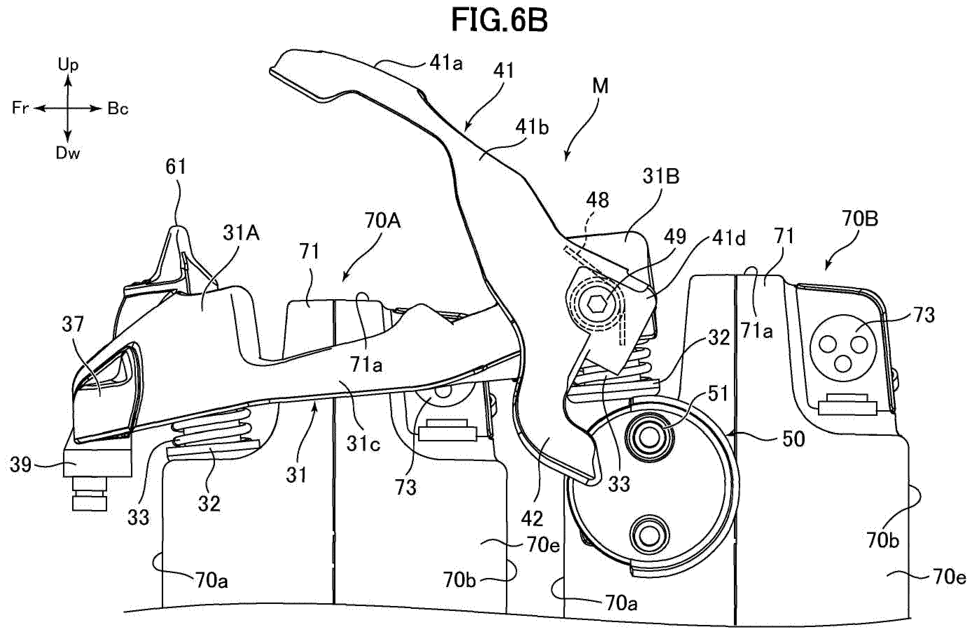

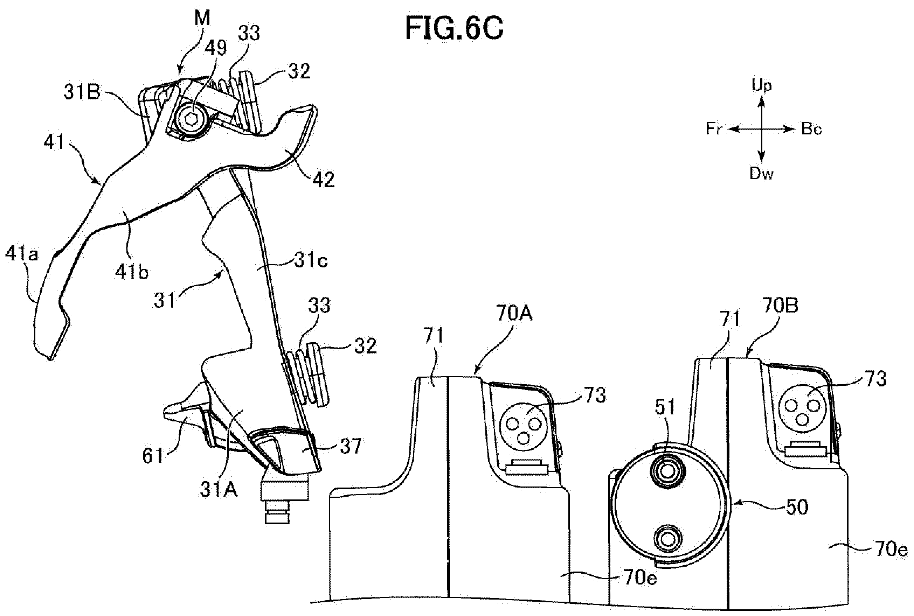

A support shaft 38 (see FIG. 6) is provided on the base of the pressing member 31. The pressing member 31 is movable between the closed position (see FIGs. 6A and 6B) and the open position (see FIG. 6C) around the support shaft 38. The support shaft 38 is provided such that its center line is along the left-right direction. When in the closed position, the pressing member 31 is positioned above the batteries 70A and 70B and restricts the upward movement of the batteries 70A and 70B (the movement in the direction of removing things from the storing units 21A and 21B). When in the open position, the pressing member 31 allows the batteries 70A and 70B to move upward. The pressing member 31 may extend rearward from the support shaft 38 when in the closed position (FIG. 6A) and extend upward from the support shaft 38 when in the open position (FIG. 6C).

As described above, a plurality of batteries 70A and 70B can be stored in the battery storing unit 21. The pressing member 31 is positioned above the plurality of batteries 70A and 70B when in the closed position (FIG. 6A) to restrict upward movement of the batteries 70A and 70B. This structure serves to restrict the movement of the batteries 70A and 70B with less operation. The number of batteries stored in the battery storing unit 21 may be greater than two. In this case, the pressing member 31 may be sized to cover all the batteries. Unlike the illustrated example, the number of batteries that the battery storing unit 21 can store may be one.

The support shaft 38 is fitted into a supported hole formed in the base (the front end in the example shown in the drawing) of the pressing member 31 to support the pressing member 31. The support shaft 38 is supported by a support member 39 (see FIG. 4). The support member 39 is attached to the case 20, for example. Specifically, the support member 39 is attached to the front side of the battery storing unit 21. This allows the case 20 and the battery locking mechanism M to be treated as one component in the assembly process of the electric two-wheeled vehicle 1, thereby facilitating the assembly operation. Alternatively, the support member 39 may be attached to the body frame (not shown). The pressing member 31 may include a retainer 37 (see FIG. 4) for preventing the support shaft 38 from coming off from the supported hole formed in the base thereof.

The supporting structure of the pressing member 31 is not limited to the illustrated example. For example, the support shaft 38 may be formed integrally with the pressing member 31. In this case, the support shaft 38 may be a convex portion protruding rightward and leftward from the base of the pressing member 31. The support member 39 may hold the support shaft (convex portion) while allowing the rotation of the support shaft.

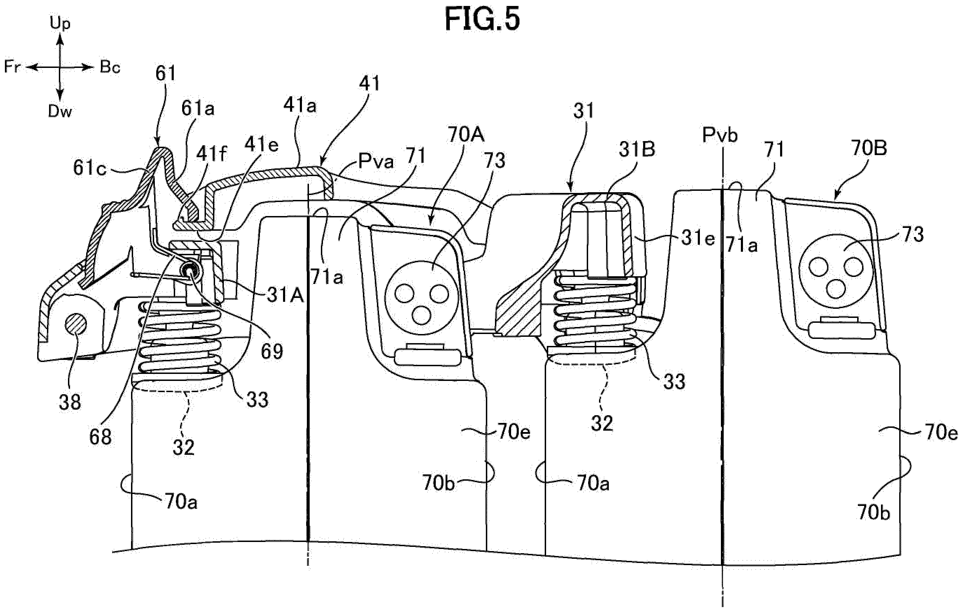

The lower side of the pressing member 31 includes contact portions 32 (see FIGs. 2 and 5) that are in contact with the upper surfaces of the batteries 70A and 70B. When the pressing member 31 is in the closed position, the contact portions 32 biases the batteries 70A and 70B downward (inserting direction in the storing units 21A and 21B). The pressing member 31 may include an elastic member 33 that pushes the contact portions 32 downward. The elastic member 33 is a coil spring, for example. The pressing member 31 may have two contact portions 32 for each of the batteries 70A and 70B. Alternatively, the number of contact portions 32 provided for each of the batteries 70A and 70B may be one or more than two. As another example, the contact portion 32 itself may be formed of an elastic member such as rubber. In this case, the pressing member 31 may not have a coil spring, which is an elastic member 33.

As shown in FIGs. 4 and 5, the pressing member 31 includes a front pressing portion 31A at its front portion. Further, the pressing member 31 includes a rear pressing portion 31B at its rear portion. When the pressing member 31 is in the closed position, the front pressing portion 31A is positioned above the battery 70A on the front side, and the rear pressing portion 31B is positioned above the battery 70B on the rear side. The pressing portions 31A and 31B each include the contact portions 32 for pushing the batteries 70A and 70B downward.

As shown in FIG. 5, the contact portion 32 provided on the battery 70A on the front side is positioned forward than the center Pva of the battery 70A in the front-rear direction. Similarly, the contact portion 32 provided on the battery 70B on the rear side is positioned forward than the center Pvb of the battery 70B in the front-rear direction. In other words, the contact portions 32 are respectively positioned toward the support shaft 38 with respect to the centers Pva and Pvb of the respective batteries 70A and 70B. This structure reduces the distance between the contact portion 32 and the support shaft 38, thereby increasing the lever ratio.

As shown in FIG. 4, the pressing member 31 may include left and right extending portions 31c extending rearward from the left portion and the right portion of the front pressing portion 31A and respectively connected to the left portion and the right portion of the rear pressing portion 31B. The pressing member 31 may include openings inside the front pressing portion 31A, the rear pressing portion 31B, and the right and left extending portions 31c. The upper surface of the battery 70A may be partially exposed through the openings. A charging inlet 73 to be described later may be provided on the upper surface of the batteries 70A and 70B. The charging inlet 73 may be exposed to the upper side through the openings described above.

The shape of the pressing member 31 is not limited to the illustrated example. For example, the pressing member 31 may not have the openings described above. That is, the pressing member 31 may be a plate-shaped member covering the upper surface of the batteries 70A and 70B in a plan view.

### [Operation lever]

The operation lever 41 is connected to the pressing member 31 via a coupling shaft 49 (see FIG. 4) at a position away from the support shaft 38 (see FIG. 6). In the illustrated example, the operation lever 41 is connected to the rear pressing portion 31B on the rear portion of the pressing member 31. The coupling shaft 49 is provided such that its center line is along the left-right direction. The operation lever 41 is movable relative to the pressing member 31 between a fixed position (FIG. 6A) and a release position (FIGs. 6B and 6C) about the coupling shaft 49.

As shown in FIG. 4, the operation lever 41 includes an operation input portion 41a and an engaging portion 42. For example, the operation lever 41 includes the operation input portion 41a at the center of the operation lever 41 in the left-right direction. Further, the operation lever 41 may include a coupled portion 41d and the engaging portion 42 respectively on the right side and left side in its rear portion. The coupled portion 41d is a portion where the coupling shaft 49 is provided. The engaging portion 42 is a portion that engages the engaged portion 51 provided in the case 20 and the body frame.

As shown in FIG. 4, the coupled portion 41d may be located on the side of the rear pressing portion 31B and connected to the rear pressing portion 31B via the coupling shaft 49. The coupling shaft 49 is a bolt, for example, but may be a convex portion integrally formed with the pressing member 31 or a convex portion integrally formed with the operation lever 41.

As shown in FIGs. 3 and 4, the operation lever 41 may include left and right extending portions 41b extending rearward from the left portion and the right portion of the operation input portion 41a. The extending portions 41b are connected to the coupled portion 41d and the engaging portion 42. The operation lever 41 may include openings inside the operation input portion 41a, the right and left extending portions 41b, and the left and right coupled portions 41d, and the left and right engaging portions 42. The upper surface of the battery 70A may be partially exposed through the openings. This shape of the operation lever 41 serves to reduce the weight of the operation lever 41.

As shown in FIG. 3, the charging inlet 73 provided on the top surface of the battery 70A may be exposed to the upper side through the openings. This facilitates charging operation of the battery 70A (operation of connecting a cable to the charging inlet 73).

The shape of the operation lever 41 is not limited to the illustrated example. For example, the operation lever 41 may not include the openings described above. That is, the operation lever 41 may be a plate-shaped member covering the upper surface of the batteries 70A and 70B in a plan view.

As shown in FIG. 4, when the pressing member 31 is in the closed position and the operation lever 41 is in the fixed position, the direction in which the pressing member 31 extends from the support shaft 38 may be opposite to the direction in which the operation lever 41 extends from the coupling shaft 49. In the illustrated example, the pressing member 31 extends rearward from the support shaft 38. The operation lever 41 extends forward from the coupling shaft 49. This arrangement of the pressing member 31 and the operation lever 41 serves to reduce the size of the battery locking mechanism M in the front-rear direction.

When in the fixed position, the operation lever 41 may overlap the pressing member 31. This arrangement of the operation lever 41 serves to reduce the size of the battery locking mechanism M in the front-rear direction. When in the released position, the operation lever 41 may be apart from the pressing member 31 upwardly. The front end 41c of the operation lever 41 may be positioned rearward than the front end 31d of the pressing member 31.

As shown in FIG. 6A, when the pressing member 31 is in the closed position and the operation lever 41 is in the fixed position, the engaging portion 42 and the engaged portion 51 are engaged with each other. The distance L1 between the operation input portion 41a and the coupling shaft 49 may be longer than the distance L2 between the engaging portion 42 and the coupling shaft 49. This serves to secure the sufficient lever ratio.

The distance L1 is a distance between the most distant position of the operation input portion 41a from the coupling shaft 49 (the front end of the upper surface of the operation input portion 41a in the illustrated example) and the center of the coupling shaft 49. The distance L2 is a distance between the portion of the engaging portion 42 in contact with the engaged portion 51 and the center of the coupling shaft 49.

The structure described above including the pressing member 31, the operation lever 41, and the engaged portion 51 facilitate the attaching operation of the battery described below. That is, the operator inserts the battery 70A (and/or 70B) into the battery storing unit 21 with the pressing member 31 being at the open position (FIG. 6C). The operator then moves the pressing member 31 to the closed position (FIG. 6B). The operator engages the engaging portion 42 of the operation lever 41 to the engaged portion 51, pushes down the operation input portion 41a of the operation lever 41, and moves the operation lever 41 from the release position (FIG. 6B) to the fixed position (FIG. 6A). This restricts upward movement of the batteries 70A and 70B.

With the structure enabling such an attaching operation, it is possible to reduce the force required for the operator to attach the batteries 70A and 70B to the storing units 21A and 21B. This results in facilitating the operation of attaching and detaching the batteries 70A and 70B. Further, the size of the battery locking mechanism M in the front-rear direction can be reduced.

In the illustrated example, the operation input portion 41a may be the central portion of the operation lever 41 in the left-right direction. Further, the operation input portion 41a may include a surface facing upward in a state where the pressing member 31 is in the closed position and the operation lever 41 is in the fixed position (FIG. 6A). This serves to smoothly perform the operation of pressing the operation lever 41.

The operation input portion 41a may be a portion in which the distance between the coupling shaft 49 and the operation input portion 41a is greater than the distance L2 (see FIG. 6A) between the engaging portion 42 and the coupling shaft 49, and its shape and position are not limited to the illustrated example.

The operation lever 41 may be a plate-shaped member that covers the upper side of the rear portion of the pressing member 31 (rear pressing portion 31B) and/or covers the upper side of the front portion of the pressing member 31 (front pressing portion 31A). In this case, the front portion of the operation lever 41 may function as the operation input portion 41a. The operation lever 41 may include a handle for the operator to grip as the operation input portion 41a.

The arrangement of the pressing member 31 and the operation lever 41 is not limited to the illustrated example. For example, opposite to the illustrated example, the pressing member 31 may extend forward from the support shaft 38 and the operation lever 41 may extend rearward from the coupling shaft 49. In yet another example, the pressing member 31 may extend rearward from the support shaft 38, and the operation lever 41 may extend downward from the coupling shaft 49. In this structure, when in the fixed position, the operation lever 41 may be located behind the battery 70B on the rear side.

As described above, the engaged portion 51 is attached to the support member 50. The support member 50 may be attached to the case 20, for example (see FIG. 2). This structure allows the engaged portion 51, the battery locking mechanism M, and the battery storing unit 21 to be interconnected. As such, they can be handled as a single component in the assembly processing of the electric two-wheeled vehicle 1, and it is thereby possible to facilitate the assembly operation. In the illustrated example, the support member 50 is attached to the inner surfaces of the right wall portion and the left wall portion of the case 20 (in other words, the side wall portion 21 (left wall portion and right wall portion) of the battery storing unit 21). The engaged portion 51 projects from the support member 50 toward the right wall portion and the left wall portion of the case 20.

Unlike the illustrated example, the support member 50 may be attached to the body frame. In still another example, the engaged portion 51 may be directly attached to the case 20 or to the body frame.

### [Engaging portion and engaged portion]

As shown in FIG. 6A, the engaging portion 42 may be hook-shaped. The engaged portion 51 may be a convex portion protruding from the support member 50 toward the side wall 21a of the battery storing unit 21. The engaging portion 42 may be L-shaped.

Specifically, the engaging portion 42 includes a lower portion 42a and a front portion 42b. The front portion 42b is positioned in front of the engaged portion 51 in a state where the pressing member 31 is in the closed position and the operation lever 41 is in the fixed position. In the same state, the lower portion 42a extends rearward from the front portion 42b and is located below the engaged portion 51. When the operation lever 41 moves from the release position (FIG. 6B) to the fixed position (FIG. 6A), the engaging portion 42 rotates about the coupling shaft 49, and the lower portion 42a moves from the front side to the lower side of the engaged portion 51. In this manner, the engagement between the engaging portion 42 and the engaged portion 51 is established.

As shown in FIG. 6B, when the operation lever 41 is in the released position, the coupling shaft 49 is positioned apart from the batteries 70A and 70B upward by the reaction force (elastic force of the elastic member 33) that the pressing member 31 receives from the batteries 70A and 70B. As shown in FIG. 6A, when the operation lever 41 is moved toward the fixed position, that is, when the engaging portion 42 is rotated about the coupling shaft 49, the operation lever 41 pushes down the coupling shaft 49 and the pressing member 31 against the reaction force from the batteries 70A and 70B (elastic force of the elastic member 33). That is, when the operation lever 41 is in the fixed position (FIG. 6A), the position of the coupling shaft 49 is positioned lower than the position of the coupling shaft 49 when the operation lever 41 is in the release position (FIG. 6B). As a result, the pressing member 31 pushes the batteries 70A and 70B downward to restrict the movement of the batteries 70A and 70B in the removing direction (upward).

As shown in FIG. 6A, the engaging portion 42 includes a contact surface 42c at its inner edge. The contact surface 42c is in contact with the engaged portion 51 when the operation lever 41 is in the released position. In the process of the operation lever 41 moving from the release position (FIG. 6B) to the fixed position (FIG. 6A), the position of the contact surface 42c is lowered. In other words, the shape of the engaging portion 42 and the position and shape of the engaged portion 51 are determined such that the position of the contact surface 42c is changed in this manner.

As shown in FIG. 6A, the engaged portion 51 may be cylindrical with a center line C1 along the left-right direction. The engaged portion 51 may be rotatable about the center line C1. In this manner, it is possible to prevent the movement of the engaging portion 42 from being inhibited by friction between the engaged portion 51 and the engaging portion 42 caused in the process in which the engaging portion 42 is engaged with the engaged portion 51, that is, the engaged portion 51 is moved along the inner surface (contact surface 42c) of the engaging portion 42.

The structures of the engaged portion 51 and the engaging portion 42 are not limited to the illustrated example if the coupling shaft 49 can be depressed along with the movement of the operation lever 41. For example, the shapes of the engaging portion 42 and the engaged portion 51 may be opposite to the illustrated example. That is, the engaged portion 51 may have a hook shape that opens forward. The engaging portion 42 of the operation lever 41 may be a convex portion (e.g., cylinder) protruding in the left-right direction toward the side wall of the battery storing unit 21. This structure allows the engaging portion 42, which is a convex portion, to enter the inside of the engaged portion 51, which is hook-shaped, with the movement of the operation lever 41, thereby establishing the engagement between the engaging portion 42 and the engaged portion 51.

As shown in FIG. 4, the entire operation lever 41 (operation input portion 41a, extending portion 41b, engaging portion 42) is integrally formed. The entire operation lever 41 may be formed of resin, for example. This serves to reduce the number of parts.

Alternatively, if the engaging portion 42 is also movable about the coupling shaft 49 with the movement of the operation input portion 41a about the coupling shaft 49, the operation input portion 41a, the extending portion 41b, and the engaging portion 42 may be separately formed and fixed to each other by a fixture such as a screw. For example, the operation input portion 41a and the extending portion 41b may be integrally formed, and the engaging portion 42 may be separately formed. The engaging portion 42 may be attached to the operation input portion 41a and the extending portion 41b by a fixture such as a screw.

The operation lever 41 may include an elastic member for biasing the operation lever 41 from the fixed position (FIG. 6A) toward the release position (FIGs. 6B, 6C). With the use of the elastic member, it is possible to facilitate the operation of returning the operation lever 41 to the release position. The spring 48 (see FIG. 6B) may be used as the elastic member. The spring 48 is a torsion coil spring, for example, and the coupling shaft 49 is fitted inside the spring 48.

A stopper member 61 (see FIG. 4) to be described later is provided at the front portion of the pressing member 31 (front pressing portion 31A in the illustrated example). Movement of the operation lever 41 from the fixed position (FIG. 6A) to the release position (FIG. 6B) may be restricted by the stopper member 61.

### [Restriction of seat movement]

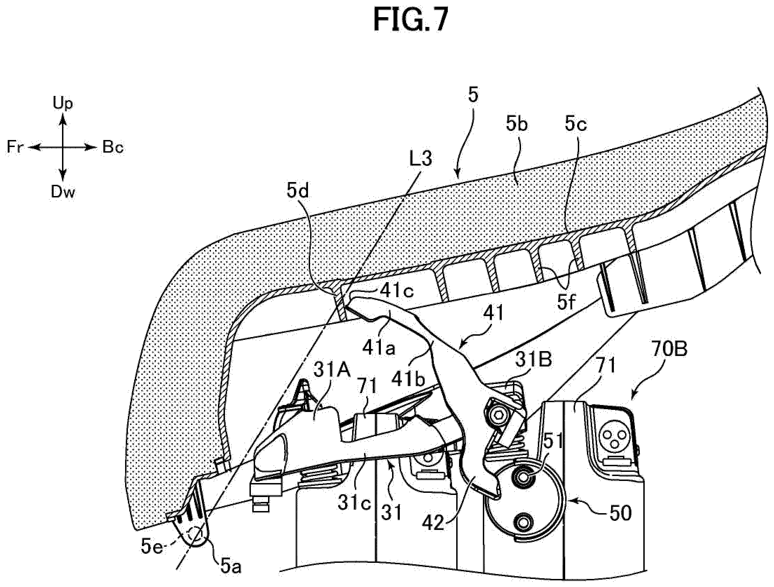

As shown in FIG. 7, the seat 5 is disposed above the case 20 and the battery locking mechanism M. The seat 5 includes a supported portion 5a at the foremost portion thereof. The supported portion 5a is supported by the shaft portion 5e, and the seat 5 is disposed rearward from the shaft portion 5e. The sheet 5 is movable up and down between the closed position (FIG. 1, non-exposed position) and the open position (exposed position) about the shaft portion 5e.

When the pressing member 31 is in the closed position and the operation lever 41 is in the released position, the operation lever 41 extends obliquely forward and upward from the coupling shaft 49. When the seat 5 is attempted to be moved from the open position to the closed position in this state, as shown in FIG. 7, the operation lever 41 prevents the sheet 5 from moving to the closed position. This prevents the driver from operating the electric two-wheeled vehicle 1 without the operation lever 41 being in the fixed position.

As shown in FIG. 7, the seat 5 includes a cushion 5b and a seat bottom 5c fixed to the lower side of the cushion 5b. A stopped portion 5d may be formed on the seat bottom 5c. The stopped portion 5d may be a convex portion protruding downward, for example. When the seat 5 is attempted to be moved from the open position to the closed position, the front end of the operation lever 41 contacts the stopped portion 5d. The stopped portion 5d may be one of ribs 5f protruding from the lower surface of the seat bottom 5c so as to increase the intensity of the seat bottom 5c.

When the front end of the operation lever 41 restricts the movement of the seat 5 in this manner, the operation lever 41 may extend in a direction intersecting the straight line L3 extending from the shaft portion 5e of the sheet 5 to the stopped portion 5d. In other words, when the operation lever 41 is in the released position, the operation lever 41 may extend in a direction substantially perpendicular to the straight line L3. This serves to strongly restrict the movement of the seat 5.

The structure for restricting the movement of the seat 5 is not limited to the illustrated example. For example, the movement of the seat 5 may be restricted by the pressing member 31 in the open position. In this case, the seat 5 may include a shaft 5e at its rear end and be movable between the seat open position and the seat closed position about the shaft portion 5e. In this case, the extending direction of the pressing member 31 in the open position (FIG. 6C) may intersect with the straight line extending from the shaft portion 5e of the seat 5 to the stopped portion 5d.

The member covering the battery locking mechanism M and the batteries 70A and 70B may be a special cover instead of the seat 5. For example, an opening for removing and inserting the batteries 70A and 70B may be formed in the outer cover 11 (FIG. 1) on the left (or right) side. In this case, a special cover for opening and closing the opening may be provided. When the pressing member 31 is in the closed position and the operation lever 41 is in the release position, the operation lever 41 may prevent the cover from moving to the closed position.

### [Relative position of battery locking mechanism to battery]

As shown in FIG. 6A, the support shaft 38 is positioned forward than the front surface 70a of the battery 70A on the front side. The coupling shaft 49 is positioned rearward than the rear surface 70b of the battery 70A. This serves to secure the lever ratio and the force from the pressing member 31 acting on the battery 70A.

As shown in FIG. 6A, when the pressing member 31 is in the closed position, the coupling shaft 49 is positioned forward than the rear surface 70b of the battery 70B on the rear side. More specifically, the center C2 of the coupling shaft 49 is positioned forward than the rear surface 70b of the battery 70B on the rear side. This arrangement of the coupling shaft 49 serves to easily ensure a large space (luggage compartment 29 in the illustrated example) rearward than the battery 70B on the rear side.

In a case where the number of batteries that can be stored in the battery storing unit 21 is more than two, the coupling shaft 49 may be positioned forward than the rear surface 70b of the battery located on the rear side.

As shown in FIG. 6A, the center C2 of the coupling shaft 49 may be positioned forward than the center Pvb of the battery 70B in the front-rear direction and rearward than the front surface 70a of the battery 70B. This makes it easier to ensure a large space (luggage compartment 29 in the illustrated example) behind the battery 70B on the rear side while securing the force acting on the battery 70B on the rear side from the pressing member 31.

The center C2 of the coupling shaft 49 may be positioned forward than the uppermost portion (handle 71 in the illustrated example) of the battery 70B on the rear side. The center C2 of the coupling shaft 49 may be positioned lower than the upper end 71a of the battery 70B on the rear side. This arrangement of the coupling shaft 49 serves to lower the positions of the coupling shaft 49 and the rear pressing portion 31B. Consequently, the size of the batteries 70A and 70B can be sufficiently ensured in the vertical direction while properly keeping the position of the seat 5. Further, a large space can be easily provided behind the battery 70B.

In the illustrated example, the batteries 70A and 70B include handles 71 (see FIG. 2) for the operator to grip at their uppermost portions. The handles 71 protrude upward from the upper surfaces of main bodies 70e of the batteries 70A and 70B (see FIG. 6A). The main body 70e is a portion that stores a battery cell. The center C2 of the coupling shaft 49 may be positioned in front of the handle 71. The center C2 of the coupling shaft 49 may be located lower than the upper end 71a (upper surface) of the handle 71.

As described above, the coupling shaft 49 connects the operation lever 41 to the rear pressing portion 31B. As shown in FIG. 6A, the rear surface 31e of the pressing member 31 may be positioned forward than the rear surface 70b of the battery 70B on the rear side. This reduces the size of the battery locking mechanism M in the front-rear direction.

The rear surface 31e of the pressing member 31 may be positioned forward than the uppermost portion (handle 71) of the battery 70B. The rear surface 31e may be positioned below the upper end 71a of the battery 70B (the upper surface of the handle 71). This arrangement serves to lower the height of the battery locking mechanism M, thereby preventing the position of the battery locking mechanism M from affecting the height of the seat 5. Unlike the illustrated example, a portion of the rear surface 31e may be positioned upward of the upper end 71a of the battery 70B (the upper surface of the handle 71).

As shown in FIG. 6A, the engaged portion 51 may be positioned below the coupling shaft 49. This arrangement of the engaged portion 51 serves to reduce the size of the battery locking mechanism M including the engaged portion 51 in the front-rear direction as compared with the case where the engaged portion 51 is formed behind the coupling shaft 49, for example, while appropriately maintaining the distance between the coupling shaft 49 and the engaged portion 51 (the length of the engaging portion 42).

As shown in FIG. 6A, the engaged portion 51 may be positioned forward than the rear surface 70b of the battery 70B on the rear side. More specifically, the engaged portion 51 may be positioned forward than the center Pvb of the battery 70B in the front-rear direction. This can reduce the size of the battery locking mechanism M including the engaged portion 51 in the front-rear direction. The support member 50 supporting the engaged portion 51 may be also positioned forward than the rear surface 70b of the battery 70B on the rear side.

The positions of the rear pressing portion 31B, the coupled portion 41d of the operation lever 41, and the coupling shaft 49 are higher than the upper surface of the main body 70e of the battery 70B. As shown in FIG. 3, the width of the rear pressing portion 31B in the left-right direction is smaller than the width of the battery 70B in the left-right direction. That is, the right end 31b of the pressing portion 31B is positioned closer to the center Cv3 than the right side surface 70f of the battery 70B in the left-right direction. Similarly, the left end of the pressing portion 31B is positioned closer to the center Cv3 than the left side surface of the battery 70B in the left-right direction. This arrangement and sizes of the coupling shaft 49, the rear pressing portion 31B, and the coupled portion 41d can sufficiently ensure the sizes of the batteries 70A and 70B in the left-right direction as compared with, for example, the structure where the coupling shaft 49 is disposed along the left and right sides of the main body 70e of the battery 70B.

In the illustrated example, the width of the coupled portion 41d of the operation lever 41 may also be smaller than the width of the battery 70B in the left-right direction. That is, the coupled portion 41d on the right side may be positioned closer to the center Cv3 in the left-right direction than the right side surface 70f of the battery 70B. Similarly, the coupled portion 41d on the left side may be positioned closer to the center Cv3 in the left-right direction than the left side surface of the battery 70B. This serves to reduce the size of the operation lever 41 in the left-right direction.

If more than two batteries are disposed in the front-rear direction (e.g., if three batteries are disposed in the front-rear direction), the positional relationship between the coupling shaft 49 and the battery 70B on the rear side described above may be applied to the positional relationship between the coupling shaft 49 and the rearmost battery (e.g., the third battery). Similarly, the positional relation between the rear pressing portion 31B and the battery 70B on the rear side described above may be applied to the rearmost battery (e.g., the third battery).

The sizes of the coupling shaft 49 and the pressing member 31 are not limited to the illustrated examples. For example, the coupling shaft 49 may be positioned upward of the rear portion of the battery 70B on the rear side. That is, the coupling shaft 49 may be positioned rearward than the center Pvb of the battery 70B in the front-rear direction.

### [Charging inlet]

The batteries 70A and 70B each include a charging inlet 73 (see FIG. 2) on its upper surface. A charging cable extending from an external power supply may be connected to the charging inlet 73. The batteries 70A and 70B may be charged by power received from an external power supply unit while being stored in the battery storing unit 21. This arrangement of the charging inlet 73 facilitates the operation of connecting the charging cable to the charging inlet 73.

As shown in FIG. 5, the charging inlets 73 may be positioned on the upper surfaces of the rear portions of the bodies 70e of the batteries 70A and 70B. More specifically, the charging inlet 73 may be positioned rearward than the handle 71 on the upper surface of the body 70e.

The charging inlet 73 is disposed so as to be connected to the charging cable from the right side or the left side. For example, as shown in FIG. 3, the charging inlet 73 is disposed so as to face to the left. More specifically, the charging inlets 73 are disposed so as to face obliquely leftward and rearward. The charging inlets 73 are disposed on the right of the batteries 70A and 70B. The charging cables connected to the charging inlets 73 extend obliquely leftward and rearward from the charging inlets 73. This arrangement of the charging inlets 73 further facilitates the operation of connecting the charging cables to the charging inlets 73.

The pressing member 31 and the operation lever 41 partially cover the upper sides of the batteries 70A and 70B and are formed to expose the charging inlets 73. For example, as shown in FIG. 3, the charging inlets 73 are exposed on the upper side in a state where the pressing member 31 is in the closed position and the operation lever 41 is in the fixed position in a plan view. This structure allows the batteries 70A and 70B to be charged while the pressing member 31 restricts the position change of the batteries 70A and 70B.

As described above, the pressing member 31 has openings inside the front pressing portion 31A, the rear pressing portion 31B, and the right and left extending portions 31c. The operation lever 41 has a U-shape opened rearward, and has openings inside the operation input portion 41a, the right and left extending portions 41b, the left and right coupled portions 41d, and the left and right engaging portions 42. As shown in FIG. 3, the charging inlet 73 of the front battery 70A on the front side is positioned inside the opening of the pressing member 31 and the opening of the operation lever 41 in a plan view and is exposed upward. The charging inlet 73 of the battery 70B on the rear side is positioned rearward than the rear surface 31e of the rear pressing portion 31B. As such, the charging inlet 73 of the battery 70B on the rear side is not covered by the operation lever 41 and the pressing member 31.

Unlike the illustrated example, the charging inlet 73 of the battery 70A on the front side may be covered by the pressing member 31 and/or the operation lever 41 in a plan view of the batteries 70A and 70B. In this case, the charging inlet 73 may be exposed in the direction in which the charging cable is connected to the charging inlet 73. This structure also allows the battery 70A to be charged while the pressing member 31 restricts the position change of the battery 70A.

### [Stopper member]

As shown in FIG. 4, the battery locking mechanism M may include a stopper member 61. The stopper member 61 is supported by the pressing member 31. The stopper member 61 is hooked to the operation lever 41 to prevent the operation lever 41 from moving from the fixed position to the release position. This prevents the operation lever 41 from returning to the release position from the fixed position by the elastic force of the elastic member provided on the operation lever 41, that is, the spring 48 (see FIG. 6B).

As shown in FIG. 5, the stopper member 61 may be supported in the front pressing portion 31A. The stopper member 61 is hooked to the front end of the operation lever 41. The operation lever 41 includes a stopped portion 41e protruding forward at its front end. The stopper member 61 includes an interference portion 61a at its rear portion. When the operation lever 41 is in the fixed position, the interference portion 61a is positioned upward of the stopped portion 41e to restrict the movement of the operation lever 41 toward the release position.

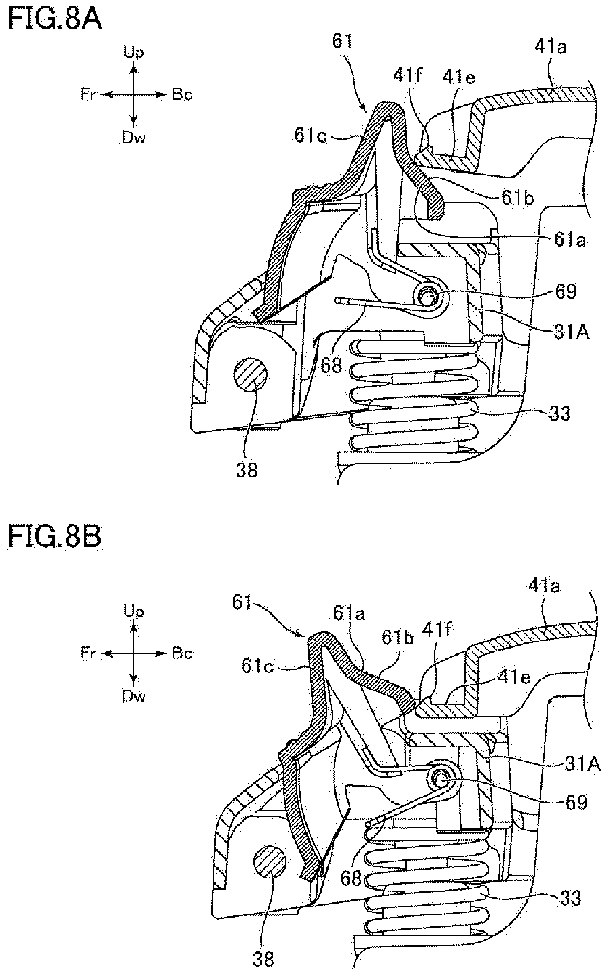

The stopper member 61 is movable between the interference position (FIG. 5) and the non-interference position (FIG. 8B) about the support shaft 69 provided below the stopper member 61. When the stopper member 61 is in the interference position, the interference portion 61a is positioned on the upper side of the stopped portion 41e to prevent the operation lever 41 in the fixed position from moving toward the release position (see FIG. 5). When the stopper member 61 is in the non-interference position, the operation lever 41 in the fixed position is allowed to move toward the release position (see FIG. 8B).

The stopper member 61 includes an elastic member that urges the stopper member 61 toward the interference position from the non-interference position. The spring 68 (see FIG. 5) may be used as the elastic member. The spring 68 is a torsion coil spring, for example, and the support shaft 69 may be fitted inside the spring 68.

As shown in FIG. 5, the support shaft 69 is positioned below the interference portion 61a. More specifically, the vertical line passing through the support shaft 69 intersects with the lower end of the interference portion 61a (the contact with the stopped portion 41e). In this structure, when the stopper member 61 is moved from the interference position toward the non-interference position, the initial moving direction of the interference portion 61a is forward. On the other hand, when the operation lever 41 is in the fixed position, the operation lever 41 extends forward from the coupling shaft 49. As such, when the operation lever 41 is moved from the fixed position toward the release position, the initial moving direction of the stopped portion 41e is upward. That is, when the operation lever 41 moves from the fixed position (FIG 6A) toward the release position (FIG 6B), the initial moving direction (upward) of the stopped portion 41e is substantially perpendicular to the initial moving direction (upward) of the interference portion 61a when the stopper member 61 moves from the interference position (FIG 6) toward the non-interference position (FIG 8B). For example, this structure serves to effectively prevent the operation lever 41 from moving from the fixed position toward the release position due to the vibration (e.g., vibration in the vertical direction) generated when the electric two-wheeled vehicle 1 is running.

As shown in FIG. 8A, the interference portion 61a includes a pressed surface 61b extending obliquely rearward and downward. In the process in which the operation lever 41 moves from the release position toward the fixed position, the tip of the stopped portion 41e contacts the pressed surface 61b. The stopped portion 41e then pushes the pressed surface 61b obliquely forward and downward. As such, when the operator moves the operation lever 41 from the release position toward the fixed position, the stopped portion 41e contacts the pressed surface 61b and moves the stopper member 61 from the interference position to the non-interference position. That is, the operator can move the operation lever 41 from the release position toward the fixed position without operating the stopper member 61.

The operation lever 41 is biased from the fixed position (FIG. 6A) toward the release position (FIG. 6B) by the action of the spring 48 (see FIG. 6B). As shown in FIG. 5, the stopped portion 41e includes an engaging portion 41f. The engaging portion 41f is a convex portion protruding upward from the front end of the stopped portion 41e, for example. The engaging portion 41f is engaged with the interference portion 61a when the stopper member 61 moves from the interference position (FIG. 5) to the non-interference position (FIG. 8B) so as to restrict the movement of the stopper member 61.

Specifically, when the operator moves the stopper member 61 from the interference position (FIG. 5) toward the non-interference position (FIG. 8B) while the pressing member 31 is in the closed position and the operation lever 41 is in the fixed position, the operation lever 41 tries to move toward the release position (FIG. 6B) by the elastic force of the spring 48. The stopped portion 41e is biased toward the lower edge of the interference portion 61a by the elastic force of the spring 48. When the stopper member 61 is moved toward the non-interference position (FIG. 8B), the lower edge of the interference portion 61a is hooked to the engaging portion 41f of the stopped portion 41e. This restricts the movement of the stopper member 61 from the interference position (FIG. 5) toward the non-interference position (FIG. 8B).

The operator is required to perform the following operation, for example, in order to move the pressing member 31 from the closed position to the open position. The operator presses the operation lever 41 in the fixed position (FIG. 6A) from the upper side to restrict the movement of the operation lever 41 toward the release position. In that state, the operator pushes forward an operated portion 61c formed on the upper portion of the stopper member 61 and moves the stopper member 61 from the interference position (FIG. 5) toward the non-interference position (FIG. 8B). Subsequently, when the operator releases the pressing of the operation lever 41, the operation lever 41 moves from the fixed position (FIG. 6A) toward the release position (FIG. 6B) by the elastic force of the spring 48. The operator then lifts the pressing member 31 and moves the pressing member 31 toward the open position (FIG 6C). In this manner, the operator temporarily restricts the movement of the operation lever 41, thereby moving the stopper member 61 from the interference position to the non-interference position. This prevents the steep movement of the operation lever 41 due to the elastic force of the spring 48.

### [Conclusion]

(1) As described above, the battery storage device S includes the battery storing unit 21 in which the batteries 70A and 70B are insertable, the pressing member 31, the operation lever 41, and the engaged portion 51. The pressing member 31 includes a base in which the support shaft 38 is provided, is movable between a closed position and an open position about the support shaft 38, prevents, when in the closed position, the batteries 70A and 70B from moving in a direction in which the batteries 70A and 70B are removed from the battery storing unit 21, and allows, when in the open position, the batteries 70A and 70B to move in the removing direction. The operation lever 41 is coupled to the pressing member 31 via the coupling shaft 49 disposed apart from the support shaft 38, is movable relative to the pressing member 31 between a fixed position and a release position about the coupling shaft 49, includes the operation input portion 41a for receiving an operation of an operator and the engaging portion 42. A distance L1 between the coupling shaft 49 and the operation input portion 41a is longer than a distance L2 between the coupling shaft 49 and the engaging portion 42. The engaged portion 51 is engaged with the engaging portion 42 of the operation lever 41 when the pressing member 31 is in the closed position and the operation lever 41 is in the fixed position.
(2) While the batteries 70A and 70B are disposed in the battery storing unit 21 and the pressing member 31 is in the closed position, the coupling shaft 49 when the operation lever 41 is in the fixed position is disposed at a first position and the coupling shaft 49 when the operation lever 41 is in the release position is disposed at a second position, and the first position is closer to the battery storing unit 21 than the second position.
(3) A plurality of batteries 70A and 70B may be insertable in the battery storing unit 21, and the pressing member 31 may prevent the plurality of batteries 70A and 70B from moving in the removing direction. In this manner, when the operation lever 41 is operated, the movement of the plurality of batteries 70A and 70B can be limited.
(4) When the pressing member 31 is in the closed position and the operation lever 41 is in the fixed position, the direction in which the pressing member 31 extends from the support shaft 38 is opposite to the direction in which the operation lever 41 extends from the coupling shaft 49. This serves to reduce a space required for the arrangement and the utilization of the pressing member 31 and the operation lever 41.
(5) When the pressing member 31 is in the closed position, the pressing member 31 extends rearward from the support shaft 38. The battery 70A includes a rear surface 70b facing rearward and a front surface 70a facing forward. The support shaft 38 is positioned forward than the front surface 70a of the battery 70A, and the coupling shaft 49 is positioned rearward than the rear surface 70b of the battery 70A. This structure serves to sufficiently ensure the force acting on the battery 70A.
(6) When the pressing member 31 is in the closed position, the pressing member 31 extends rearward from the support shaft 38. The battery 70A on the front side and the battery 70B on the rear side are insertable in the battery storing unit 21. The battery 70B on the rear side includes a rear surface 70b facing rearward. When the pressing member 31 is in the closed position, the coupling shaft 49 is away from the support shaft 38 rearward and is positioned forward than the rear surface 70b. This structure serves to easily secure a sufficient space behind the battery 70B on the rear side.
(7) When the pressing member 31 is in the closed position, the pressing member 31 may extend rearward from the support shaft 38. The battery 70A on the front side and the battery 70B on the rear side may be insertable in the battery storing unit 21. The batteries 70A and 70B may each have an end part (upper end 71a) in a direction in which the batteries 70A and 70B are removed from the battery storing unit 21. When the pressing member 31 is in the closed position, the coupling shaft 49 may be apart from the support shaft 38 rearward and positioned forward than the upper end 71a of the battery 70B on the rear side. This allows the position of the coupling shaft 49 to be close to the battery 70B on the rear side in the inserting direction of the battery 70B on the rear side. As a result, the size of the battery 70B can be increased while maintaining the positions of the operation lever 41 and the pressing member 31.
(8) The coupling shaft 49 is positioned lower than the upper end 71a of the battery 70B on the rear side. This allows the position of the operation lever 41 to be close to the battery in the inserting direction of the battery. As a result, the overall size including the battery, the pressing member 31, and the operation lever 41 can be reduced.
(9) The operation lever 41 includes the spring 48 for biasing the operation lever 41 from the fixed position toward the release position. This structure facilitates the operation of returning the operation lever 41 to the release position.
(10) The stopper member 61 is attached to the pressing member 31, where the stopper member 61 is hooked to the operation lever 41 to prevent the operation lever 41 from moving from the fixed position to the release position. This structure prevents the operation lever 41 from moving to the open position by receiving the elastic force of the spring 48 at a timing that is not intended by the user.
(11) The stopper member 61 is movable between an interference position and a non-interference position. At the interference position, the stopper member 61 prevents the operation lever 41 in the fixed position from moving toward the release position. At the non-interference position, the stopper member 61 allows the operation lever 41 in the fixed position to move toward the release position. The operation lever 41 includes the engaging portion 41f. The engaging portion 41f hooks onto the stopper member 61 in a course in which the operation lever 41 moves from the fixed position to the release position, and prevents the stopper member 61 from moving from the interference position toward the non-interference position. According to this, when the operator tries to move the stopper member 61 from the interference position to the non-interference position, the engaging portion 41f of the operation lever 41 is engaged with the stopper member 61. As such, the operator disengages the engaging portion 41f of the operation lever 41 from the stopper member 61 and then moves the stopper member 61 to the non-interference position so as to move the operation lever 41 toward the release position. As a result, it is possible to prevent the sudden movement of the operation lever 41.
(12) The operation lever 41 includes the stopped portion 41e that contacts the stopper member 61. The stopper member 61 includes the interference portion 61a that contacts the stopped portion 41e. An initial moving direction of the stopped portion 41e when the operation lever 41 moves from the fixed position toward the release position is substantially perpendicular to an initial moving direction of the interference portion 61a when the stopper member 61 moves from the interference position toward the non-interference position. For example, this structure serves to effectively prevent the operation lever 41 from being moved from the fixed position toward the release position due to the vibration generated when the electric two-wheeled vehicle 1 is running.
(13) The pressing member 31 includes the contact portion 31 that contacts the batteries 70A and 70B to urge the batteries 70A and 70B in the inserting direction of the battery storing unit 21. The pressing member 31 may extend rearward from the support shaft 38 when in the closed position. The contact portion 32 may be positioned closer to the support shaft 38 than the center of the batteries 70A and 70B in the front-rear direction. This structure serves to reduce the distance between the contact portion 32 and the support shaft 38, thereby increasing the lever ratio.
(14) The battery 70A includes the upper surface on which the charging inlet 73 is provided. The pressing member 31 and the operation lever 41 cover the upper surface of the battery 70A. The pressing member 31 and the operation lever 41 are formed so as to expose the charging inlet 73. This structure allows the battery 70A to be charged while the pressing member 31 restricts the position change of the battery 70A.
(15) The luggage compartment 29 is formed behind the battery storing unit 21. The inside of the battery storing unit 21 and the inside of the luggage compartment 29 are connected to each other. This structure allows large luggage to be stored in the battery storing unit 21 and the luggage compartment 29 when the battery 70B is not disposed in the battery storing unit 21.
(16) The electric two-wheeled vehicle 1 includes the batteries 70A and 70B and the power unit 6 including an electric motor driven by power from the batteries 70A and 70B.
(17) The seat 5 is movable between an exposed position, at which the batteries 70A and 70B, the battery storing unit 21, the pressing member 31, and the operation lever 41 are exposed, and a non-exposed position, at which the batteries 70A and 70B, the battery storing unit 21, the pressing member 31, and the operation lever 41 are covered When the pressing member 31 is in the open position or the operation lever 41 is in the release position, the operation lever 41 prevents the seat 5 from moving from the exposed position to the non-exposed position. According to this structure, the seat 5 is open when the operation lever 41 is not in the fixed position, and thus it is possible to prevent the driver from driving the electric two-wheeled vehicle in such a condition. Instead of the seat 5, the cover provided on the outer cover 11 may cover the batteries 70A and 70B, for example.

### [Modifications]

The battery storage device and the electric vehicle proposed in the present disclosure are not limited to the battery storage device S and electric two-wheeled vehicle 1 described above, and various modifications may be made within the scope of the appended claims.

For example, a plurality of batteries may be disposed in the left-right direction in the battery storing unit.

As another example, the stopper member 61 may not be provided on the operation lever 41. In this case, the engaging portion 42 may be formed to engage the engaged portion 51 against the elastic force of the spring 48.

## Claims

1. A battery storage device for an electric vehicle comprising:
a battery storing unit (21) configured for inserting at least one battery (70A or 70B);
a pressing member (31) that includes a base in which a support shaft (38) is provided, is movable between a closed position and an open position about the support shaft (38), the pressing member (31) being configured to prevent, when in the closed position, the at least one battery (70A or 70B), when inserted in the battery storing unit (21), from moving in a direction (Up) in which the at least one battery (70A or 70B) is removable from the battery storing unit (21), and the pressing member (31) being configured to allow, when in the open position, the at least one battery (70A or 70B) to move in the removing direction (Up);
an operation lever (41) that is coupled to the pressing member (31) via a coupling shaft (49) disposed apart from the support shaft (38), the operation lever (41) being movable relative to the pressing member (31) between a fixed position and a release position about the coupling shaft (49), the operation lever (41) including an operation input portion (41a) configured for receiving an operation of an operator and an engaging portion (42), a distance between the coupling shaft (49) and the operation input portion (41a) being longer than a distance between the coupling shaft (49) and the engaging portion (42); and
an engaged portion (50) that is configured to be engaged with the engaging portion (42) of the operation lever (41) when the pressing member (31) is in the closed position and the operation lever (41) is in the fixed position, wherein when the pressing member (31) is in the closed position, the pressing member (31) extends in a first direction (Bc) from the support shaft (38),
the battery storing unit (21) is configured for inserting a first battery (70A) and a second battery (70B) as the at least one battery, and when the first battery (70A) and the second battery (70B) are inserted in the battery storing unit (21),
the second battery (70B) being configured for inserting into battery storing unit (21) includes a third surface (70b) facing in the first direction (Bc), **characterized in that** the second battery (70B) being disposed in the first direction (Bc) with respect to the first battery (70A), and
when the pressing member (31) is in the closed position, the coupling shaft (49) is away from the support shaft (38) in the first direction (Bc) and positioned farther in a second direction (Fr), which is opposite to the first direction (Bc),
than the third surface (70b).

2. The battery storage device according to claim 1, **characterized in that** while the at least one battery (70A or 70B) is disposed in the battery storing unit (21) and the pressing member (31) is in the closed position, the operation lever (41) in the fixed position is configured to bring the coupling shaft (49) to be placed at a first position, and the operation lever (41) in the release position is configured to bring the coupling shaft (49) to be placed at a second position,
the first position being closer to the battery storing unit (21) than the second position.

3. The battery storage device according to claim 1 or 2, **characterized in that** the battery storing unit (21) is configured for inserting a plurality of batteries (70A and 70B) as the at least one battery, and
the pressing member (31), when in the closed position, is configured to prevent the plurality of batteries (70A and 70B) from moving in the direction in which the plurality of batteries (70A and 70B) are removed.

4. The battery storage device according to any one of claims 1 to 3, **characterized in that** when the pressing member (31) is in the closed position and the operation lever (41) is in the fixed position, the first direction (Bc) in which the pressing member (31) extends from the support shaft (38) is opposite to the second direction (Fr) in which the operation lever (41) extends from the coupling shaft (49).

5. The battery storage device according to any one of claims 1 to 4, **characterized in that** when the pressing member (31) is in the closed position, the pressing member (31) extends in the first direction (Bc) from the support shaft (38),
the at least one battery (70A or 70B) being configured for inserting into battery storing unit (21) includes a first surface (70b) facing in the first direction (Bc) and a second surface (70a) facing in the second direction (Fr), which is opposite to the first direction (Bc), when the at least one battery (70A or 70B) is inserted in the battery storing unit (21),
the support shaft (38) is positioned farther in the second direction (Fr) than the second surface (70a) of the at least one battery (70A or 70B), when the at least one battery (70A or 70B) is inserted in the battery storing unit (21), and
the coupling shaft (49) is positioned farther in the first direction (Bc) than the first surface (70b) of the at least one battery (70A or 70B), when the at least one battery (70A or 70B) is inserted in the battery storing unit (21).

6. The battery storage device according to any one of claims 1 to 5, **characterized in that** when the pressing member (31) is in the closed position, the pressing member (31) extends in the first direction (Bc) from the support shaft (38),
the battery storing unit (21) is configured for inserting a first battery (70A) and a second battery (70B) as the at least one battery, and when the first battery (70A) and the second battery (70B) are inserted in the battery storing unit (21), the second battery (70B) being disposed in the first direction (Bc) with respect to the first battery (70A),
the first battery (70A) and the second battery (70B) being configured for inserting into battery storing unit (21) each have an end part (71a) in a third direction (Up) in which the batteries are removable from the battery storing unit (21), and
when the pressing member (31) is in the closed position, the coupling shaft (49) is away from the support shaft (38) in the first direction (Bc) and positioned farther in the second direction (Fr) than the end part (71a) of the second battery (70B), where the second direction (Fr) is opposite to the first direction (Bc).

7. The battery storage device according to claim 6, **characterized in that** the at least one battery (70A or 70B) being configured for inserting into battery storing unit (21) includes an end part (71a) in the third direction (Up) in which the at least one battery (70A or 70B) is removable from the battery storing unit (21), and the coupling shaft (49) is positioned farther in an inserting direction (Dw) of the at least one battery (70A or 70B) than the end part (71a) of the at least one battery (70A or 70B).

8. The battery storage device according to claim 7, **characterized in that** the operation lever (41) includes an elastic member (48) that is configured to urge the operation lever (41) from the fixed position toward the release position.

9. The battery storage device according to claim 8, **characterized in that** a stopper member (61) is attached to the pressing member (31), the stopper member (61) being configured to be hooked to the operation lever (41) to prevent the operation lever (41) from moving from the fixed position to the release position.

10. The battery storage device according to claim 9, **characterized in that** the stopper member (61) is movable between an interference position and a non-interference position, the stopper member (61) being configured to, at the interference position, prevent the operation lever (41) in the fixed position from moving toward the release position, the stopper member (61) being configured to, at the non-interference position, allow the operation lever (41) to move toward the release position,
the operation lever (41) includes an engaging portion (41f), and
the engaging portion (41f) is configured to hook onto the stopper member (61) in a course in which the operation lever (41) moves from the fixed position to the release position, and prevents the stopper member (61) from moving from the interference position toward the non-interference position.

11. The battery storage device according to claim 9, **characterized in that** the operation lever (41) includes a stopped portion (41e) that is configured to contact the stopper member (61),
the stopper member (61) includes an interference portion (61a) that is configured to contact the stopped portion (41e),
the stopped portion (41e) is configured to initially move in a third direction (Up) when the operation lever (41) moves from the fixed position toward the release position, and the interference portion (61a) of the stopper member (61) is configured to initially move in a fourth direction (Fr) when the stopper member (61) moves from the interference position toward the non-interference position, where the third direction (Up) is substantially perpendicular to the fourth direction (Fr).

12. The battery storage device according to any one of claims 1 to 11, **characterized in that** the pressing member (31) includes a contact portion (32) that is configured to contact the at least one battery (70A or 70B) to urge the at least one battery (70A or 70B) in an inserting direction (Dw) of the battery storing unit (21),
the pressing member (31) extends in a first direction (Bc) from the support shaft (38) when in the closed position, and
the contact portion (32) is positioned closer to the support shaft (38) than a center (Pva, Pvb) of the at least one battery (70A or 70B) in the first direction (Fr-Bc).

13. The battery storage device according to any one of claims 1 to 12, **characterized in that** the at least one battery (70A or 70B) being configured for inserting into battery storing unit (21) includes a surface on which a charging inlet (73) is provided,
the pressing member (31) and the operation lever (41) are configured to cover the surface of the at least one battery (70A or 70B), and
the pressing member (31) and the operation lever (41) are formed so as to expose the charging inlet (73), when the at least one battery (70A or 70B) is inserted in the battery storing unit (21).

14. An electric vehicle comprising:
the battery storage device (S) according to at least one of the claims 1 to 13;
the at least one battery (70A or 70B) being configured for inserting into battery storing unit (21); and
a power unit (6) that includes an electric motor driven by power from the at least one battery (70A or 70B).

15. The electric vehicle comprising according to claim 14, wherein battery storage device (S) comprises a luggage compartment (29) formed behind or in front of the battery storing unit (21) with regard to a front-rear direction of the vehicle, wherein
an inside of the battery storing unit (21) is connected to an inside of the luggage compartment (29).

16. The electric vehicle according to claim 15, further comprising a cover (5) that is movable between an exposed position, at which the at least one battery (70A or 70B), the battery storing unit (21), the pressing member (31), and the operation lever (41) are exposed, and a non-exposed position, at which the at least one battery (70A or 70B), the battery storing unit (21), the pressing member (31), and the operation lever (41) are covered, wherein
when the pressing member (31) is in the open position or the operation lever (41) is in the release position, the pressing member (31) or the operation lever (41) are configured to prevent the cover (5) from moving from the exposed position to the non-exposed position.

17. The electric vehicle according to claim 16, wherein the cover is a seat (5) of the electric vehicle.

## Patentansprüche

1. Eine Batterielagervorrichtung für ein Elektrofahrzeug, die umfasst:
eine Batterielagereinheit (21), die zum Einsetzen von zumindest einer Batterie (70A oder 70B) konfiguriert ist;
ein Drückelement (31), das eine Basis enthält, in der eine Lagerwelle (38) vorgesehen ist, das zwischen einer geschlossenen Position und einer offenen Position um die Lagerwelle (38) herum bewegbar ist, wobei das Drückelement (31) konfiguriert ist, um, wenn es sich in der geschlossenen Position befindet, zu verhindern, dass die zumindest eine Batterie (70A oder 70B) wenn sie in die Batterielagereinheit (21) eingesetzt ist, sich in eine Richtung (Up) zu bewegen, in der die zumindest eine Batterie (70A oder 70B) aus der Batterielagereinheit (21) einnehmbar ist, und wobei das Drückelement (31) konfiguriert ist, um es der zumindest einen Batterie (70A oder 70B) zu ermöglichen, sich in der Entnahmerichtung (Up) zu bewegen, wenn sie sich in der offenen Position befindet;
einen Betätigungshebel (41), der mit dem Drückelement (31) über eine Kopplungswelle (49) gekoppelt ist, die getrennt von der Lagerwelle (38) angeordnet ist, wobei der Betätigungshebel (41) relativ zu dem Drückelement (31) zwischen einer Fixierposition und einer Freigabeposition um die Kopplungswelle (49) bewegbar ist, der Betätigungshebel (41) einen Betätigungseingabeabschnitt (41a), der zur Aufnahme einer Betätigung durch einen Bediener konfiguriert ist, und einen Eingriffsabschnitt (42) enthält, wobei ein Abstand zwischen der Kopplungswelle (49) und dem Betätigungseingabeabschnitt (41a) größer ist als ein Abstand zwischen der Kopplungswelle (49) und dem Eingriffsabschnitt (42); und
einen eingegriffen Abschnitt (50), der konfiguriert ist, um mit dem Eingriffsabschnitt (42) des Betätigungshebels (41) in Eingriff zu stehen, wenn sich das Drückelement (31) in der geschlossenen Position und der Betätigungshebel (41) in der Fixierposition befindet, wobei, wenn sich das Drückelement (31) in der geschlossenen Position befindet, sich das Drückelement (31) in einer ersten Richtung (Bc) von der Lagerwelle (38) erstreckt,
die Batterielagereinheit (21) zum Einsetzen einer ersten Batterie (70A) und einer zweiten Batterie (70B) als die zumindest eine Batterie konfiguriert ist, und wenn die erste Batterie (70A) und die zweite Batterie (70B) in die Batterielagereinheit (21) eingesetzt sind,
die zweite Batterie (70B), die zum Einsetzen in die Batterielagereinheit (21) konfiguriert ist, eine dritte Oberfläche (70b) aufweist, die in die erste Richtung (Bc) weist, **dadurch gekennzeichnet, dass**
die zweite Batterie (70B) in der ersten Richtung (Bc) in Bezug auf die erste Batterie (70A) angeordnet ist, und
wenn sich das Drückelement (31) in der geschlossenen Position befindet, ist die Kopplungswelle (49) in der ersten Richtung (Bc) von der Lagerwelle (38) entfernt und in einer zweiten Richtung (Fr), die der ersten Richtung (Bc) entgegengesetzt ist, weiter als die dritte Fläche (70b) positioniert.

2. Die Batterielagervorrichtung gemäß Anspruch 1, **dadurch gekennzeichnet, dass,** während die zumindest eine Batterie (70A oder 70B) in der Batterielagereinheit (21) angeordnet ist und sich das Drückelement (31) in der geschlossenen Position befindet, der Betätigungshebel (41) in der Fixierposition konfiguriert ist, um die Kopplungswelle (49) in eine erste Position zu bringen, und der Betätigungshebel (41) in der Freigabeposition konfiguriert ist, um die Kopplungswelle (49) in eine zweite Position zu bringen,
wobei die erste Position näher an der Batterielagereinheit (21) liegt als die zweite Position.

3. Die Batterielagervorrichtung gemäß Anspruch 1 oder 2, **dadurch gekennzeichnet, dass** die Batterielagereinheit (21) zum Einsetzen einer Mehrzahl von Batterien (70A und 70B) als die zumindest eine Batterie konfiguriert ist, und
das Drückelement (31), wenn es sich in der geschlossenen Position befindet, konfiguriert ist, um zu verhindern, dass sich die Mehrzahl von Batterien (70A und 70B) in die Richtung bewegen, in der die Mehrzahl von Batterien (70A und 70B) entnommen werden.

4. Die Batterielagervorrichtung gemäß irgendeinem der Ansprüche 1 bis 3, **dadurch gekennzeichnet, dass,** wenn sich das Drückelement (31) in der geschlossenen Position und der Betätigungshebel (41) in der Fixierposition befindet, die erste Richtung (Bc), in der sich das Drückelement (31) von der Lagerwelle (38) aus erstreckt, der zweiten Richtung (Fr) entgegengesetzt ist, in der sich der Betätigungshebel (41) von der Kopplungswelle (49) aus erstreckt.

5. Die Batterielagervorrichtung gemäß irgendeinem der Ansprüche 1 bis 4, **dadurch gekennzeichnet, dass,** wenn sich das Drückelement (31) in der geschlossenen Position befindet, sich das Drückelement (31) in der ersten Richtung (Bc) von der Lagerwelle (38) erstreckt,
die zumindest eine Batterie (70A oder 70B), die zum Einsetzen in die Batterielagereinheit (21) konfiguriert ist, eine erste Oberfläche (70b), die in die erste Richtung (Bc) weist, und eine zweite Oberfläche (70a), die in die zweite Richtung (Fr) weist, die der ersten Richtung (Bc) entgegengesetzt ist, wenn die zumindest eine Batterie (70A oder 70B) in die Batterielagereinheit (21) eingesetzt ist, enthält,
die Lagerwelle (38) in der zweiten Richtung (Fr) weiter positioniert ist als die zweite Oberfläche (70a) der zumindest einen Batterie (70A oder 70B), wenn die zumindest eine Batterie (70A oder 70B) in die Batterielagereinheit (21) eingesetzt ist, und
die Kopplungswelle (49) in der ersten Richtung (Bc) weiter positioniert ist als die erste Oberfläche (70b) der zumindest einen Batterie (70A oder 70B), wenn die zumindest eine Batterie (70A oder 70B) in die Batterielagereinheit (21) eingesetzt ist.

6. Die Batterielagervorrichtung gemäß irgendeinem der Ansprüche 1 bis 5, **dadurch gekennzeichnet, dass,** wenn sich das Drückelement (31) in der geschlossenen Position befindet, sich das Drückelement (31) in der ersten Richtung (Bc) von der Lagerwelle (38) erstreckt,
die Batterielagereinheit (21) zum Einsetzen einer ersten Batterie (70A) und einer zweiten Batterie (70B) als die zumindest eine Batterie konfiguriert ist, und wenn die erste Batterie (70A) und die zweite Batterie (70B) in die Batterielagereinheit (21) eingesetzt sind, die zweite Batterie (70B) in der ersten Richtung (Bc) in Bezug auf die erste Batterie (70A) angeordnet ist,
die erste Batterie (70A) und die zweite Batterie (70B), die zum Einsetzen in die Batterielagereinheit (21) konfiguriert sind, jeweils ein Endteil (71a) in einer dritten Richtung (Up) haben, in der die Batterien aus der Batterielagereinheit (21) entnehmbar sind, und
wenn sich das Drückelement (31) in der geschlossenen Position befindet, ist die Kopplungswelle (49) in der ersten Richtung (Bc) von der Lagerwelle (38) entfernt und in der zweiten Richtung (Fr) weiter als der Endteil (71a) der zweiten Batterie (70B) positioniert, wobei die zweite Richtung (Fr) der ersten Richtung (Bc) entgegengesetzt ist.

7. Die Batterielagervorrichtung gemäß Anspruch 6, **dadurch gekennzeichnet, dass** die zumindest eine Batterie (70A oder 70B), die zum Einsetzen in die Batterielagereinheit (21) konfiguriert ist, ein Endteil (71a) in der dritten Richtung (Up) enthält, in der die zumindest eine Batterie (70A oder 70B) aus der Batterielagereinheit (21) entnehmbar ist, und
die Kopplungswelle (49) in einer Einführrichtung (Dw) der zumindest einen Batterie (70A oder 70B) weiter positioniert ist als der Endteil (71a) der zumindest einen Batterie (70A oder 70B).

8. Die Batterielagervorrichtung gemäß Anspruch 7, **dadurch gekennzeichnet, dass** der Betätigungshebel (41) ein elastisches Element (48) enthält, das konfiguriert ist, um den Betätigungshebel (41) aus der Fixierposition in die Freigabeposition zu drücken.

9. Die Batterielagervorrichtung gemäß Anspruch 8, **dadurch gekennzeichnet, dass** ein Stopperelement (61) an dem Drückelement (31) angebracht ist, wobei das Stopperelement (61) konfiguriert ist, um an dem Betätigungshebel (41) eingehakt zu werden, um zu verhindern, dass sich der Betätigungshebel (41) von der Fixierposition in die Freigabeposition bewegt.

10. Die Batterielagervorrichtung gemäß Anspruch 9, **dadurch gekennzeichnet, dass** das Stopperelement (61) zwischen einer Überschneidungsposition und einer Nicht-Überschneidungsposition bewegbar ist, wobei das Stopperelement (61) konfiguriert ist, in der Überschneidungsposition, zu verhindern, dass sich der Betätigungshebel (41) in der Fixierposition in Richtung der Freigabeposition bewegt, wobei das Stopperelement (61) konfiguriert ist, um in der Nicht-Überschneidungsposition dem Betätigungshebel (41) erlaubt, sich in Richtung der Freigabeposition zu bewegen, der Betätigungshebel (41) einen Eingriffsabschnitt (41f) enthält, und
der Eingriffsabschnitt (41f) konfiguriert ist, um an dem Stopperelement (61) in einem Verlauf, in dem sich der Betätigungshebel (41) von der Fixierposition in die Freigabeposition bewegt, einzuhaken, und verhindert, dass sich das Stopperelement (61) von der Überschneidungsposition in die Nicht-Überschneidungsposition bewegt.

11. Die Batterielagervorrichtung gemäß Anspruch 9, **dadurch gekennzeichnet, dass** der Betätigungshebel (41) einen gestoppten Abschnitt (41e) enthält, der konfiguriert ist, um das Stopperelement (61) zu kontaktieren,
das Stopperelement (61) einen Überschneidungsabschnitt (61a) aufweist, der so konfiguriert ist, dass er den gestoppten Abschnitt (41e) berührt,
der gestoppte Abschnitt (41e) so konfiguriert ist, um sich anfänglich in eine dritte Richtung (Up) zu bewegen, wenn sich der Betätigungshebel (41) von der Fixierposition in Richtung der Freigabeposition bewegt, und der Überschneidungsabschnitt (61a) des Stopperelements (61) konfiguriert ist, um sich anfänglich in eine vierte Richtung (Fr) zu bewegen, wenn sich das Stopperelement (61) von der Überschneidungsposition in Richtung der Nicht-Überschneidungsposition bewegt, wobei die dritte Richtung (Up) im Wesentlichen senkrecht zu der vierten Richtung (Fr) ist.

12. Die Batterielagervorrichtung gemäß irgendeinem der Ansprüche 1 bis 11, **dadurch gekennzeichnet, dass** das Drückelement (31) einen Kontaktabschnitt (32) enthält, der konfiguriert ist, um die zumindest eine Batterie (70A oder 70B) zu kontaktieren, um die zumindest eine Batterie (70A oder 70B) in eine Einführrichtung (Dw) der Batterielagereinheit (21) zu drücken,
das Drückelement (31) sich in der geschlossenen Position in einer ersten Richtung (Bc) von der Lagerwelle (38) aus erstreckt, und
der Kontaktabschnitt (32) näher an der Lagerwelle (38) positioniert ist als ein Zentrum (Pva, Pvb) der zumindest einen Batterie (70A oder 70B) in der ersten Richtung (Fr-Bc).

13. Die Batterielagervorrichtung gemäß irgendeinem der Ansprüche 1 bis 12, **dadurch gekennzeichnet, dass** die zumindest eine Batterie (70A oder 70B), die zum Einsetzen in die Batterielagereinheit (21) konfiguriert ist, eine Fläche aufweist, an der ein Ladeeingang (73) vorgesehen ist,
das Drückelement (31) und der Betätigungshebel (41) konfiguriert sind, um die Oberfläche der zumindest einen Batterie (70A oder 70B) abzudecken, und
das Drückelement (31) und der Betätigungshebel (41) ausgebildet sind, um den Ladeeingang (73) freigeben, wenn die zumindest eine Batterie (70A oder 70B) in die Batterielagereinheit (21) eingesetzt ist.

14. Ein elektrisches Fahrzeug, das umfasst:
die Batterielagervorrichtung (S) nach zumindest einem der Ansprüche 1 bis 13;
die zumindest eine Batterie (70A oder 70B), die zum Einsetzen in die Batterielagereinheit (21) konfiguriert ist; und
ein Antriebseinheit (6) mit einem Elektromotor, der durch die Energie der zumindest einen Batterie (70A oder 70B) angetrieben wird.

15. Das Elektrofahrzeug gemäß Anspruch 14, wobei die die Batterielagervorrichtung (S) einen Gepäckraum (29) aufweist, der in Bezug auf eine Front-Rückwärts-Richtung des Fahrzeugs hinter oder vor der Batterielagereinheit (21) ausgebildet ist, wobei eine Innenseite der Batterielagereinheit (21) mit einer Innenseite des Gepäckraums (29) verbunden ist.

16. Das Elektrofahrzeug gemäß Anspruch 15, ferner umfassend eine Abdeckung (5), die zwischen einer exponierten Position, in der die zumindest eine Batterie (70A oder 70B), die Batterielagereinheit (21), das Drückelement (31) und der Betätigungshebel (41) exponiert sind, und einer nicht-exponierten Position, in der die zumindest eine Batterie (70A oder 70B), die Batterielagereinheit (21), das Drückelement (31) und der Betätigungshebel (41) abgedeckt sind, bewegbar ist, wobei
wenn sich das Drückelement (31) in der offenen Position oder der Betätigungshebel (41) in der Freigabeposition befindet, das Drückelement (31) oder der Betätigungshebel (41) konfiguriert sind, um zu verhindern, dass sich die Abdeckung (5) von der exponierten Position in die nicht-exponierten Position zu bewegen.

17. Das Elektrofahrzeug gemäß Anspruch 16, wobei die Abdeckung ein Sitz (5) des Elektrofahrzeugs ist.

## Revendications

1. Dispositif de stockage de batterie pour véhicule électrique, comprenant :
une unité de stockage de batterie (21) configurée pour y insérer au moins une batterie (70A ou 70B) ;
un élément de compression (31) qui inclut une base dans laquelle est pourvu un axe de support (38), mobile entre une position fermée et une position ouverte autour de l'axe de support (38), l'élément de compression (31) étant configuré pour empêcher, quand il est dans la position fermée, ladite au moins une batterie (70A ou 70B), quand elle est insérée dans l'unité de stockage de batterie (21), de se déplacer dans une direction (vers le haut) dans laquelle ladite au moins une batterie (70A ou 70B) peuvent être enlevée de l'unité de stockage de batterie (21), et l'élément de compression (31) étant configuré pour permettre, quand il est dans la position ouverte, à ladite au moins une batterie (70A ou 70B) de se déplacer dans la direction d'enlèvement (vers le haut) ;
un levier d'actionnement (41) qui est couplé à l'élément de compression (31) via un axe d'accouplement (49) disposé à l'écart de l'axe de support (38), le levier d'actionnement (41) étant mobile par rapport à l'élément de compression (31) entre une position fixée et une position de libération autour de l'axe d'accouplement (49), le levier d'actionnement (41) incluant une portion d'entrée d'actionnement (41a) configurée pour recevoir un actionnement d'un opérateur et une portion d'engagement (42), la distance entre l'axe d'accouplement (49) et la portion d'entrée d'actionnement (41a) étant supérieure à la distance entre l'axe d'accouplement (49) et la portion d'engagement (42) ; et
une portion engagée (50) qui est configurée pour être engagée avec la portion d'engagement (42) du levier d'actionnement (41) quand l'élément de compression (31) est dans la position fermée et le levier d'actionnement (41) est dans la position fixée, dans lequel, quand l'élément de compression (31) est dans la position fermée, l'élément de compression (31) s'étend dans une première direction (Bc) à partir de l'axe de support (38),
l'unité de stockage de batterie (21) est configurée pour y insérer une première batterie (70A) et une deuxième batterie (70B) en tant que ladite au moins une batterie, et quand la première batterie (70A) et la deuxième batterie (70B) sont insérées dans l'unité de stockage de batterie (21), la deuxième batterie (70B) configurée pour être insérée dans l'unité de stockage de batterie (21) inclut une troisième surface (70b) qui fait face à la première direction (Bc),
**caractérisé en ce que** la deuxième batterie (70B) est disposée dans la première direction (Bc) par rapport à la première batterie (70A), et
quand l'élément de compression (31) est dans la position fermée, l'axe d'accouplement (49) est éloigné de l'axe de support (38) dans la première direction (Bc) et positionné plus loin dans une deuxième direction (Fr), qui est opposée à la première direction (Bc), que la troisième surface (70b).

2. Dispositif de stockage de batterie selon la revendication 1, **caractérisé en ce que**, tandis que ladite au moins une batterie (70A ou 70B) est disposée dans l'unité de stockage de batterie (21) et que l'élément de compression (31) est dans la position fermée, le levier d'actionnement (41) dans la position fixée est configuré pour amener l'axe d'accouplement (49) à être placé dans une première position, et le levier d'actionnement (41) dans la position de libération est configuré pour amener l'axe d'accouplement (49) à être placé dans une deuxième position,
la première position étant plus proche de l'unité de stockage de batterie (21) que la deuxième position.

3. Dispositif de stockage de batterie selon la revendication 1 ou 2, **caractérisé en ce que** l'unité de stockage de batterie (21) est configurée pour y insérer une pluralité de batteries (70A et 70B) en tant que ladite au moins une batterie, et
l'élément de compression (31), quand il est dans la position fermée, est configuré pour empêcher la pluralité de batteries (70A et 70B) de se déplacer dans la direction dans laquelle la pluralité de batteries (70A et 70B) est enlevée.

4. Dispositif de stockage de batterie selon l'une quelconque des revendications 1 à 3, **caractérisé en ce que**, quand l'élément de compression (31) est dans la position fermée et que le levier d'actionnement (41) est dans la position fixée, la première direction (Bc) dans laquelle l'élément de compression (31) s'étend à partir de l'axe de support (38) est opposée à la deuxième direction (Fr) dans laquelle le levier d'actionnement (41) s'étend à partir de l'axe d'accouplement (49).

5. Dispositif de stockage de batterie selon l'une quelconque des revendications 1 à 4, **caractérisé en ce que**, quand l'élément de compression (31) est dans la position fermée, l'élément de compression (31) s'étend dans la première direction (Bc) à partir de l'axe de support (38),
ladite au moins une batterie (70A ou 70B) configurée pour être insérée dans l'unité de stockage de batterie (21) inclut une première surface (70b) qui fait face à la première direction (Bc) et une deuxième surface (70a) qui fait face à la deuxième direction (Fr), qui est opposée à la première direction (Bc), quand ladite au moins une batterie (70A ou 70B) est insérée dans l'unité de stockage de batterie (21),
l'axe de support (38) est positionné plus loin dans la deuxième direction (Fr) que la deuxième surface (70a) de ladite au moins une batterie (70A ou 70B), quand ladite au moins une batterie (70A ou 70B) est insérée dans l'unité de stockage de batterie (21), et
l'axe d'accouplement (49) est positionné plus loin dans la première direction (Bc) que la première surface (70b) de ladite au moins une batterie (70A ou 70B), quand ladite au moins une batterie (70A ou 70B) est insérée dans l'unité de stockage de batterie (21).

6. Dispositif de stockage de batterie selon l'une quelconque des revendications 1 à 5, **caractérisé en ce que**, quand l'élément de compression (31) est dans la position fermée, l'élément de compression (31) s'étend dans la première direction (Bc) à partir de l'axe de support (38),
l'unité de stockage de batterie (21) est configurée pour y insérer une première batterie (70A) et une deuxième batterie (70B) en tant que ladite au moins une batterie, et quand la première batterie (70A) et la deuxième batterie (70B) sont insérées dans l'unité de stockage de batterie (21), la deuxième batterie (70B) est disposée dans la première direction (Bc) par rapport à la première batterie (70A),
la première batterie (70A) et la deuxième batterie (70B) configurées pour être insérées dans l'unité de stockage de batterie (21) ont chacune une partie d'extrémité (71a) dans une troisième direction (vers le haut) dans laquelle les batteries peuvent être enlevées de l'unité de stockage de batterie (21), et
quand l'élément de compression (31) est dans la position fermée, l'axe d'accouplement (49) est éloigné de l'axe de support (38) dans la première direction (Bc) et positionné plus loin dans la deuxième direction (Fr) que la partie d'extrémité (71a) de la deuxième batterie (70B), où la deuxième direction (Fr) est opposée à la première direction (Bc).

7. Dispositif de stockage de batterie selon la revendication 6, **caractérisé en ce que** ladite au moins une batterie (70A ou 70B) configurée pour être insérée dans l'unité de stockage de batterie (21) inclut une partie d'extrémité (71a) dans la troisième direction (vers le haut) dans laquelle ladite au moins une batterie (70A ou 70B) peut être enlevée de l'unité de stockage de batterie (21), et l'axe d'accouplement (49) est positionné plus loin dans une direction d'insertion (Dw) de ladite au moins une batterie (70A ou 70B) que la partie d'extrémité (71a) de ladite au moins une batterie (70A ou 70B).

8. Dispositif de stockage de batterie selon la revendication 7, **caractérisé en ce que** le levier d'actionnement (41) inclut un élément élastique (48) qui est configuré pour pousser le levier d'actionnement (41) de la position fixée vers la position de libération.

9. Dispositif de stockage de batterie selon la revendication 8, **caractérisé en ce qu'**un élément de butée (61) est attaché à l'élément de compression (31), l'élément de butée (61) étant configuré pour être accroché au levier d'actionnement (41) afin d'empêcher le levier d'actionnement (41) de se déplacer de la position fixée à la position de libération.

10. Dispositif de stockage de batterie selon la revendication 9, **caractérisé en ce que** l'élément de butée (61) est mobile entre une position d'interférence et une position de non-interférence, l'élément de butée (61) étant configuré pour, dans la position d'interférence, empêcher le levier d'actionnement (41) dans la position fixée de se déplacer vers la position de libération, l'élément de butée (61) étant configuré pour, dans la position de non-interférence, permettre au levier d'actionnement (41) de se déplacer vers la position de libération,
le levier d'actionnement (41) inclut une portion d'engagement (41f), et
la portion d'engagement (41f) est configurée pour s'accrocher à l'élément de butée (61) dans une course où le levier d'actionnement (41) se déplace de la position fixée à la position de libération, et empêche l'élément de butée (61) de se déplacer de la position d'interférence vers la position de non-interférence.

11. Dispositif de stockage de batterie selon la revendication 9, **caractérisé en ce que** le levier d'actionnement (41) inclut une portion de butée (41e) qui est configurée pour entrer en contact avec l'élément de butée (61),
l'élément de butée (61) inclut une portion d'interférence (61a) qui est configurée pour entrer en contact avec la portion de butée (41e),
la portion de butée (41e) est configurée pour se déplacer initialement dans une troisième direction (vers le haut) quand le levier d'actionnement (41) se déplace de la position fixée vers la position de libération, et la portion d'interférence (61a) de l'élément de butée (61) est configurée pour se déplacer initialement dans une quatrième direction (Fr) quand l'élément de butée (61) se déplace de la position d'interférence vers la position de non-interférence, où la troisième direction (vers le haut) est sensiblement perpendiculaire à la quatrième direction (Fr).

12. Dispositif de stockage de batterie selon l'une quelconque des revendications 1 à 11, **caractérisé en ce que** l'élément de compression (31) inclut une portion de contact (32) qui est configurée pour entrer en contact avec ladite au moins une batterie (70A ou 70B) afin de pousser ladite au moins une batterie (70A ou 70B) dans une direction d'insertion (Dw) de l'unité de stockage de batterie (21),
l'élément de compression (31) s'étend dans une première direction (Bc) à partir de l'axe de support (38) quand il est dans la position fermée, et
la portion de contact (32) est positionnée plus près de l'axe de support (38) qu'un centre (Pva, Pvb) de ladite au moins une batterie (70A ou 70B) dans la première direction (Fr-Bc).

13. Dispositif de stockage de batterie selon l'une quelconque des revendications 1 à 12, **caractérisé en ce que** ladite au moins une batterie (70A ou 70B) configurée pour être insérée dans l'unité de stockage de batterie (21) inclut une surface sur laquelle est pourvue une entrée de charge (73),
l'élément de compression (31) et le levier d'actionnement (41) sont configurés pour recouvrir la surface de ladite au moins une batterie (70A ou 70B), et
l'élément de compression (31) et le levier d'actionnement (41) sont formés de manière à exposer l'entrée de charge (73) quand ladite au moins une batterie (70A ou 70B) est insérée dans l'unité de stockage de batterie (21).

14. Véhicule électrique comprenant :
le dispositif de stockage de batterie (S) selon au moins l'une des revendications 1 à 13 ;
ladite au moins une batterie (70A ou 70B) configurée pour être insérée dans l'unité de stockage de batterie (21) ; et
un groupe moteur (6) qui inclut un moteur électrique entraîné par l'énergie provenant de ladite au moins une batterie (70A ou 70B).

15. Véhicule électrique selon la revendication 14, dans lequel le dispositif de stockage de batterie (S) comprend un compartiment à bagages (29) formé derrière ou devant l'unité de stockage de batterie (21) par rapport à une direction avant-arrière du véhicule, dans lequel
l'intérieur de l'unité de stockage de batterie (21) est connecté à l'intérieur du compartiment à bagages (29).

16. Véhicule électrique selon la revendication 15, comprenant en outre un couvercle (5) qui est mobile entre une position exposée, dans laquelle ladite au moins une batterie (70A ou 70B), l'unité de stockage de batterie (21), l'élément de compression (31) et le levier d'actionnement (41) sont exposés, et une position non exposée, dans laquelle ladite au moins une batterie (70A ou 70B), l'unité de stockage de batterie (21), l'élément de compression (31) et le levier d'actionnement (41) sont recouverts, dans lequel
quand l'élément de compression (31) est dans la position ouverte ou le levier d'actionnement (41) est dans la position de libération, l'élément de compression (31) ou le levier d'actionnement (41) sont configurés pour empêcher le couvercle (5) de se déplacer de la position exposée à la position non exposée.

17. Véhicule électrique selon la revendication 16, dans lequel le couvercle est un siège (5) du véhicule électrique.
